# EUROPEAN PATENT APPLICATION

(11) **EP 2 153 985 A1**
(43) Date of publication of application: **17.02.2010**
(21) Application number: 08764799.6
(22) Date of filing: 28.05.2008
(51) Int. Cl.: B32B 15/092, B32B 9/00, C09J 163/00, C23F 1/28

(54) **STEEL PRODUCT COMPOSITE AND PROCESS FOR PRODUCING THE STEEL PRODUCT COMPOSITE**

(30) Priority: 28.05.2007 JP 2007140072
(71) Applicant: Taisei Plas Co., Ltd., Tokyo, 103-0007 (JP)
(72) Inventor: NARITOMI, Masanori, Tokyo 103-0023 (JP); ANDO, Naoki, Tokyo 103-0023 (JP)
(74) Representative: TER MEER - STEINMEISTER & PARTNER GbR
(86) International application number: PCT/JP2008/059783
(87) International publication number: WO 2008/146833

(57) **Abstract**

The present invention provides an excellent structural material for movable equipment, structural members for building materials, electronic and electrical equipment and the like by bonding an ordinary steel material and an FRP prepreg strongly to each other to facilitate mechanical joining and disassembly using bolts and nuts or the like.

It has been found that a steel material having surface configuration with specifically determined ultra-fine irregularities is compatible with an epoxy resin adhesive and exhibits thus strong adhesion. This technique can be utilized to produce a composite component 26 that comprises steel plates 28, as a cover material, integrated with FRP 27. The composite component can be assembled with other metallic members through fastening using bolts 30. Also, structural members having the FRP 27 in the main structure and the steel material at the ends can be easily produced by virtue of the above strong adhesion.

## Description

### TECHNICAL FIELD

The present invention relates to a composite of a steel material with another metal alloy or a composite of a steel material with fiber-reinforced plastic or the like which are used in industrial machinery such as transport equipment, electric equipment, medical equipment or general machinery as well as in consumer appliances. The present invention relates also to a joining method of such a composite. More specifically, the present invention relates to a steel material composite employing both an ordinary steel material used in automobiles, food processing machinery, medical equipment, general-purpose machinery and other equipment and a fiber-reinforced plastic (hereafter, "FRP"), the steel material composite being used in various devices, equipment and systems and relates to a manufacturing method thereof.

### BACKGROUND OF THE INVENTION

Technologies for integrating metals with resins are required in manufacturing industries of a wide variety of articles and components of these articles, for instance in manufacturing products or parts of automobiles, domestic appliances, industrial machinery or the like. Numerous adhesives have been developed to meet these requirements. Various excellent adhesives are known among these adhesives. For instance, adhesives, which exhibit their adhesive effects at normal temperature or upon heating, are used to integrally bond a metal and a synthetic resin. This method constitutes a standard bonding technique used at present.

Other joining technologies that do not rely on adhesives have also been developed. Examples of such technologies include, for instance, methods for integrating light metals, such as magnesium, aluminum or alloys thereof, or ferrous alloys such as stainless steels with high-strength engineering resins, without any intervening adhesive. Manufacturing technologies that have been developed and proposed include, for instance, methods that involve joining simultaneous with injection or the like (hereafter, "injection joining"), wherein a polybutylene terephthalate resin (hereafter, "PBT") or a polyphenylene sulfide resin (hereafter, "PPS") is injected and joined with an aluminum alloy (see, for instance, WO 03/064150 A1:Patent Document 1 and WO 2004/041532:Patent Document 2). In addition, the possibility of using such resins in injection joining of, for instance, magnesium alloys, copper alloys, titanium alloys and stainless steel has recently been demonstrated and proposed (see PCT/JP2007/073526:Patent Document 3, PCT/JP2007/070205:Patent Document 4, PCT/JP2007/074749:Patent Document 5 and PCT/JP2007/075287:Patent Document 6).

These inventions, all of which stem from the same inventors, rely on joining principles that are derived from a comparatively simple joining theory. The theory encompasses an "NMT" theoretical hypothesis, so named by the inventors, relating to injection joining of aluminum alloys, and a "new NMT" theoretical hypothesis relating to injection joining of all metal alloys. The theoretical hypothesis "new NMT", applicable in a wider scope and advanced by one of the inventors (Naoki Ando), posits the following. Creation of injection joining with strong joining force requires that both the metal and the injected resin meet several conditions. Among these, the metal must meet the conditions below. Specifically, the metal alloy must meet three conditions, as follows.

According to the first condition, the chemically etched metal alloy has a rough surface (surface roughness) having a texture of a period of 1 to 10 µm and a profile height difference of about half the period, i.e. 0.5 to 5 µm. It is difficult in practice to cover the entire surface accurately with such roughness by means of chemical reactions due to their variability and unsteadiness. In concrete terms, the above-mentioned roughness conditions are found to be substantially met when the rough surface exhibits a texture of irregular period from 0.2 to 20 µm and a roughness curve (surface roughness curve) having a maximum height difference ranging from 0.2 to 5 µm, as observed using a surface roughness meter, or exhibits an average period, i.e. an average length (RSm) of 0.8 to 10 µm and a maximum height roughness (Rz) of 0.2 to 5 µm, according to JIS Standards (JIS B 0601:2001 (ISO 4287)), based on scanning analysis using a scanning probe microscope.

The period of the irregular shapes of the ideal rough surface ranges from 1 to 10 µm, as described above, so the inventors refer to this range as a "surface of micron-scale roughness" for an easily understandable definition. Further, it is required that the inner wall face of the recesses in the surface has fine irregularities of a period not smaller than 10 nm, preferably a period of 50 nm, as a result of an oxidation treatment or the like (second condition) and also that the above rough surface of the metal alloy is a ceramic substance, specifically a metal oxide thin layer, or a metal phosphate thin layer, thicker than a natural oxide layer (third condition). As regards the conditions for the injected resin, suitable resins that can be used are hard crystalline resins, having a crystallization rate upon rapid cooling, lowered for instance through compounding with other polymers that are appropriate for the resin. In practice resin compositions can be used in which a crystalline hard resin such as PBT, PPS or the like is compounded with other appropriate polymers, as well as with glass fibers and the like. These resin compositions can be joined by injection joining using ordinary injection molding machines and metallic molds for injection joining. The injection bonding process will be explained below according to the "new NMT" hypothesis by the inventors.

The aforementioned injected molten resin is led into a mold at a temperature lower than the melting point of the resin by about 150°C. The molten resin is found to be cooled within flow channels, such as sprues, gates or the like in the mold down to a temperature at or below the melting point. It is understood that no immediate phase change to a solid state through crystallization occurs in zero time, even at or below the melting point of the molten resin, when the molten crystalline resin is cooled rapidly. In effect, the molten resin persists in a molten, supercooled state, though for a very short time, also at or below the melting point. The duration of this supercooling appears to be successfully prolonged somewhat in PBT or PPS through some special compounding, as described above. This feature can be employed to cause the molten resin to penetrate into micron-scale recesses in the surface of the metal, before the abrupt rise in viscosity that accompanies the generation of large amounts of micro-crystals. After having penetrated into the recesses, the molten resin becomes cooled, whereby the number of micro-crystals increases dramatically, causing viscosity to rise abruptly. It is thus inferred that the size and shape of the recesses determine whether the molten resin can penetrate or not all the way into the recesses.

Experimental results indicate that, irrespective of the type of metal, the molten resin can penetrate substantially all the way into recesses having a diameter of 1 to 10 µm and into recesses having a roughness period of 1 to 10 µm, provided that the depth or height difference of the recesses is about half the period. When the inner wall faces of the recesses have a rough surface as per the second condition above as evidenced in microscopic observations using such as electron micrographs, the resin penetrates partly also into the crevices of these fine irregularities. As a result, the resin catches onto the irregularities and is difficult to pull away when a pulling force acts from the resin side. Such a rough surface affords an effective spike-like catching when the surface is that of a metal oxide with high-hardness, as per the third condition. Although joining per se is a matter of the resin component and the surface of the metal alloy, adding reinforcing fibers or an inorganic filler to the resin composition brings the coefficient of linear expansion of the resin as a whole closer to that of the metal alloy. This allows preserving easily the joining strength after joining. Composites obtained through injection joining of a PBT or PPS resin with a magnesium alloy, copper alloy, titanium alloy, stainless steel or the like, in accordance with the above hypothesis by the inventors, are strong integrated products, having a shear breaking strength of 200 to 300 kgf/cm² (about 20 to 30 N/mm² = 20 to 30 MPa) or more and a tensile breaking strength of 300 to 400 Kgf/cm² (30 to 40 MPa) or more.

The inventors believe the "new NMT" theoretical hypothesis to be true as borne out for injection joining of numerous metal alloys. The advocated hypothesis, which is based on inferences relating to fundamental aspects of polymer physical chemistry, must however be vetted by many chemists and scientists. For instance, although free argument has been made about the molten crystalline resin upon rapid cooling, the question of whether the crystallization rate really drops has not been discussed heretofore from the viewpoint of polymer physics. Although the inventors believe that the above inferences are correct, any corroborative experimentation has not been conducted. Specifically, the reaction of the hypothesis is a high-rate reaction at high temperature and under high pressure, so it cannot be measured or observed directly. The hypothesis, moreover, postulates a purely physical anchor effect underlying joining, which may deviate somewhat from conventional knowledge. As far as the inventors are aware, most monographs or the like concerned with adhesion and compiled by specialists ordinarily ascribe chemical factors to the causes underlying adhesive forces during joining.

Owing to the technical difficulties involved in the experiments, the inventors gave up on validating their hypothesis through direct experimentation and decided on a reverse approach. Specifically, the inventors assumed that the "new NMT" theoretical hypothesis can be applied also to adhesive joining and set out to study whether high-performance adhesive phenomena can be proved by a similar theory. That is, the inventors decided to ascertain whether non-conventional joined systems can be discovered by dealing with only the surface state of adherend materials and by using commercially available general-purpose epoxy adhesives.

Remarkable developments have been achieved in bonding by way of adhesives. In particular, high-technology adhesives are being used, for instance, in aircraft assembly. In these technologies, bonding is accomplished using high-performance adhesives, following a surface treatment in which an aluminum alloy is imparted corrosion resistance and microscopic texture. However, on closer inspection of conventional bonding methods where a metal is an adherend, metal surface treatment technology relies still on staple treatment methods, such as phosphoric acid treatment, chromate treatment and anodization, developed 40 or more years ago, and it seems as though no new developments have come along in recent years. As regards the development of adhesives themselves, mass production of instant adhesives took off several decades ago but, as far as the inventors know, no new breakthroughs have been achieved since the landmark introduction of second-generation acrylic adhesives.

From the viewpoint of adhesion theory as well, and although the inventors may not be aware of the very latest academic trends, the chemical and physical explanations jointly proffered in the commercially available monographs and the like appear to lack in clarity and also in ideas that may lead to further developments. Fortunately, it is possible to use nowadays, freely and inexpensively, electron microscopes having resolutions of several nm. The inventors have been able to discuss the proposed "NMT" and "new NMT" hypotheses relating to injection joining on the basis of observations of such high-resolution electron micrographs. As a result, the inventors eventually proposed the above-mentioned hypothesis, thoroughly based on anchor effects. Therefore, we expected novel experiences to be gained as a result of working on adhesion theory, in terms of adhesive bonding, by emphasizing physical aspects.

The bonding procedure that is planned as an experimental method for bonding using adhesives is as follows. Firstly a metal alloy (metal alloy satisfying the above three conditions) with a surface identical to the surface in the above-described injection joining experiments is prepared. A liquid, one-liquid type of epoxy adhesive is coated onto the surface of the metal pieces. The metal pieces are placed once under vacuum, after which the pressure is reverted to normal pressure. As a result, the adhesive penetrates into the ultra-fine irregularities on the surface of the metal alloy. An adherend member is affixed then onto the face with ultra-fine irregularities and the adhesive is cured by heating. Herein, the low-viscosity epoxy adhesive can penetrate into the micron-scale large recesses (recesses of the irregularities according to the first condition) on the surface of the metal alloy. As a result, the epoxy adhesive can be then cured in the recesses by heating.

Actually, the inner wall faces of the recesses are faces with ultra-fine irregularities (the second condition above) and these ultra-fine irregularities have the high hardness of a ceramic substance (the third condition above). Conceivably, therefore, the epoxy resin, which solidifies in the recesses into which it has penetrated, is caught onto the spiky ultra-fine irregularities and becomes hard to pull out. The above occurrence has been named a "NAT (nano-adhesion technology)" hypothesis by the inventors, who have endeavored to validate experimentally the inferences of the hypothesis. This "NAT" hypothesis has been borne out for aluminum alloys (see PCT/JP2008/54539:Patent Document 7) and then for magnesium alloys, copper alloys, titanium alloys and stainless steel (see PCT/JP2008/57309:Patent Documents 8, PCT/JP2008/56820:Paent Document 9, PCT/JP2008/57131:Patent Document 10 and PCT/JP2008/57922:Patent Document 11). By adjusting the surface configuration of the metal as the adherend, the inventors achieved unprecedented strong bonding of various metal alloys.

### SUMMARY OF THE INVENTION

For instance, strong shear and tensile fracture strengths of 700 Kgf/cm² (about 70 N/mm² = 70 MPa) or higher between A7075 aluminum alloys were obtained using a commercially available general-purpose epoxy adhesive. Strong shear fracture strength, of 500 Kgf/cm² or higher, was obtained for bonded products of other metal alloys. The present invention has an aim to show that the NAT hypothesis can be demonstrated for steel materials used in many ways beginning at stainless steel. Most requirements relating to metal adhesion would be met if the above-described strong bonding could be made possible in general steel materials used in large amounts. That is, strong adhesion could be achieved consistently using epoxy adhesives not only between steel materials but also between metals conditioned in accordance with the "NAT" hypothesis.

For instance, steel material parts could also be strongly bonded to aluminum alloy parts and to titanium alloy parts. FRP materials, using a matrix of epoxy adhesive, have proved to be the least problematic bonding counterparts for adhesive bonding of the pieces of the above metals. As a result, it should be possible to elicit strong bonding also with carbon-fiber reinforced plastics (hereafter "CFRP") and glass-fiber reinforced plastics (hereafter, "GFRP"). Application of the above above-described NAT hypothesis to bonding of ordinary steel materials, which are the most inexpensive high-strength metal alloys, should provide a boost to the NAT technology proposed by the inventors.

When considering bonding between FRP and steel materials, an example of structures that comes to mind is a stacked structure in which a plate-like FRP material is sandwiched between thin steel plates. Plate-like FRP materials employing such a structure become somewhat heavier but make prepreg demolding agents unnecessary. This allows preventing deterioration of the epoxy resin caused by the demolding agent. In a sandwich structure in which the prepreg is sandwiched between thick plates of a steel material, not over the entire surface thereof but only partially, and in which through-holes are formed in the structure, the structure could be joined to other parts by way of bolts inserted through the through-holes. In such a structure, breakage of the FRP portion can be averted even if bolt fastening were made so as to exceed the allowable stress.

Also, plate-like or pipe-like steel material composites, resulting from integrating steel material members at the ends with a CFRP member as the main material at the central portion, can employ joining means of known structure for joining with other metals, such as bolt/nut joining, fitting and the like, at the ends of the steel material composite. This facilitates assembly and disassembly of structures that, in addition, can be made yet lighter. The resulting members, moreover, are suitable for mass production. The steel material composite can thus be useful for obtaining lighter and stronger members and devices not only employed in movable equipment, such as automobiles, bicycles, movable robots, mobile electronic and electric devices but also employed in construction materials and household electric products. Ordinary steel materials are pervasive materials in all countries and regions. Thus, the possibility of using laminates of steel materials and FRPs in most manufacturing industries should make a substantial contribution to an energy-saving, environmentally-conscious society in future.

To achieve the above goal, the present invention encompasses the aspects below.

A steel material composite according to the present invention 1 comprises a first metal part which is made of a ferrous material and has micron-scale roughness produced by chemical etching and substantially the entire surface of which is covered with, under electron microscopy, ultra-fine irregularities shaped as an endless succession of steps having a height of 50 to 150 nm, a depth of 80 to 500 nm and a width of several hundred to several thousand nm, the surface being a thin layer of a native oxide of iron; and another adherend that is bonded using, as an adhesive, an epoxy adhesive (1) that penetrates into the ultra-fine irregularities.

The ultra-fine irregularities of the ferrous material may have a height ranging from 50 to 150 nm and a length ranging from 80 to 200 nm. The ferrous material may be made of a hot rolled steel material. In the case of a hot rolled steel material, the above height may range from 80 to 150 nm or from 50 to 100 nm and the depth may range from 80 to 500 nm or from 80 to 200 nm.

A steel material composite according to the present invention 2 comprises a first metal part which is made of a steel material and has micron-scale roughness produced by chemical etching and substantially the entire surface of which is covered with, under electron microscopy, ultra-fine irregularities shaped as an endless succession of steps having a height of 50 to 150 nm, a depth of 80 to 500 nm and a width of several hundred to several thousand nm, the surface being a thin layer of a metal oxide or a metal phosphate; and another adherend that is bonded using, as an adhesive, an epoxy adhesive (1) that penetrates into the ultra-fine irregularities.

As regards the height range of the ultra-fine irregularities of the ferrous material, the length may range from 80 to 200 nm for a height of 80 to 150 nm, from 80 to 500 nm for a height of 80 to 150 nm and from 80 to 200 nm for a height of 50 to 100 nm.

A steel material composite according to the present invention 3 comprises a steel material part which has micron-scale roughness produced by chemical etching and the surface of which exhibits, under electron microscopy, smooth-surfaced natural stone-like configuration, having long/short diameters of 2 to 5 µm and scattered or present at a high density over a rough surface having periodic fine irregularities, the rough surface being covered with, under electron microscopy, ultra-fine irregularities shaped as square stone-like and/or granular configuration, having long/short diameters of 10 to 400 nm and present at high density on a plane or stacked onto each other at a yet higher density and the surface being mainly a thin layer comprising zinc phosphate or zinc-calcium phosphate; and another adherend that is bonded using, as an adhesive, an epoxy adhesive (1) that penetrates into the ultra-fine irregularities.

A steel material composite according to the present invention may be so arranged that the first metal part is a steel material having further adhered thereto one compound selected from among ammonia, hydrazine and a water-soluble amine compound. A steel material composite according to the present invention may be so arranged that the metal oxide or metal phosphate that makes up the surface of the first metal part is one oxide selected from among chromium oxides, manganese oxides and zinc phosphate.

A steel material composite according to the present invention may be so arranged that the adherend is a second metal part made of a steel material and having the ultra-fine irregularities formed thereon. A steel material composite according to the present invention may be so arranged that the adherend is a fiber-reinforced plastic, comprising the epoxy adhesive and reinforced through filling and laminating of one or more types selected from among long fibers, short fibers and fiber cloth.

A steel material composite according to the present invention may be so arranged that the roughness of the ultra-fine irregularities has an average length (RSm) of 0.8 to 10 µm and a maximum height (Rz) of 0.2 to 5 µm. A steel material composite according to the present invention may be so arranged that the chemical etching involves immersion in an aqueous solution of a non-oxidizing strong acid.

A steel material composite according to the present invention may be so arranged that the chemical etching involves immersion in an aqueous solution containing sulfuric acid. A steel material composite according to the present invention may be so arranged that a resin of a cured product (1) of the epoxy adhesive contains an elastomer component by no more than 30 parts by mass relative to a total 100 parts by mass of resin fraction. The steel material composite according to the present invention may be so arranged that a cured product (1) of the epoxy adhesive contains a filler by a total of no more than 100 parts by mass relative to a total 100 parts by mass of resin fraction.

A steel material composite according to the present invention may be so arranged that the filler is one or more types of reinforcing fiber selected from among glass fibers, carbon fibers and aramid fibers and one or more types of powder filler selected from among calcium carbonate, magnesium carbonate, silica, talc, clay and glass. A steel material composite according to the present invention may be so arranged that the elastomer component has a particle size of 1 to 15 µm and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C and a polyolefin resin.

A method for manufacturing a steel material composite according to the present invention 1 comprises a shaping step of mechanically shaping a steel material; a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these ultra-fine irregularities to exhibit roughness having an average length (RSm) of 1 to 10 µm and a maximum height roughness (Rz) of 0.2 to 5 µm, as analyzed by scanning probe microscopy; a step of applying an epoxy adhesive onto the ultra-fine irregularities; and a bonding step of bonding another adherend to the ultra-fine irregularities having the epoxy adhesive applied thereon.

A method for manufacturing a steel material composite according to the present invention 2 comprises a shaping step of mechanically shaping a steel material into a steel material part; a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these fine irregularities to exhibit roughness having an length (RSm) of 1 to 10 µm and a maximum height roughness (Rz) of 0.2 to 5 µm, as observed by scanning probe microscopy; a step of applying an epoxy adhesive onto the ultra-fine irregularities; a step of placing the steel material part, having been coated with the epoxy adhesive, in an airtight vessel, depressurizing the vessel and then pressurizing the vessel, to cause the epoxy adhesive to impregnate the steel material part; and a bonding step of bonding another adherend to the ultra-fine irregularities having the epoxy adhesive applied thereon.

A method for manufacturing a steel material composite according to the present invention 3 comprises a shaping step of mechanically shaping a steel material; a liquid treatment step including chemical etching for causing the entire surface of the shaped steel material part to be covered with, under electron microscopy, ultra-fine irregularities in which a thin amorphous material covers a shape of an endless succession of steps having a height and depth of 50 to 500 nm, and a width of several hundred to several thousand nm and for causing a large texture made up of these fine irregularities to exhibit roughness having an length (RSm) of 1 to 10 µm and a maximum height roughness (Rz) of 0.2 to 5 µm, as analyzed by scanning probe microscopy; a step of applying an epoxy adhesive onto the ultra-fine irregularities; and a bonding step of bonding another adherend to the ultra-fine irregularities having the epoxy adhesive applied thereon.

A method for manufacturing a steel material composite according to the present invention 4 comprises a shaping step of mechanically shaping a steel material; a liquid treatment step including chemical etching for causing the entire surface of the shaped steel material part to be covered with, under electron microscopy, ultra-fine irregularities in which a thin amorphous material covers a shape of an endless succession of steps having a height and depth of 50 to 500 nm and a width of several hundred to several thousand nm and for causing a large texture made up of these fine irregularities to exhibit roughness having an length (RSm) of 1 to 10 µm and a maximum height roughness (Rz) of 0.2 to 5 µm, as analyzed by scanning probe microscopy; a step of applying an epoxy adhesive onto the ultra-fine irregularities; a step of placing the substrate, having been coated with an adhesive, in an airtight vessel, depressurizing the vessel and then pressurizing the vessel to cause the adhesive to impregnate the substrate; and a bonding step of bonding another adherend to the ultra-fine irregularities having the epoxy adhesive applied thereon.

A method for manufacturing a steel material composite according to the present invention 5 comprises a shaping step of mechanically shaping a steel material; a liquid treatment step including chemical etching for causing the entire surface of the shaped steel material part to be covered with, under electron microscopy, ultra-fine irregularities shaped as an endless succession of steps having a height and depth of 50 to 500 nm, and a width of several hundred to several thousand nm, and for causing a large texture made up of these fine irregularities to exhibit roughness having an length (RSm) of 1 to 10 µm and a maximum height roughness (Rz) of 0.2 to 5 µm, as analyzed by scanning probe microscopy; a supplementary step of immersing the substrate, after being subjected to the above step, in an aqueous solution containing one type selected from among a hexavalent chromium compound, a permanganate salt, a zinc phosphate compound, ammonia, hydrazine and a water-soluble amine compound; a step of applying an epoxy adhesive onto the ultra-fine irregularities; and a bonding step of bonding another adherend to the ultra-fine irregularities having the epoxy adhesive applied thereon.

A method for manufacturing a steel material composite according to the present invention 6 comprises a shaping step of mechanically shaping a steel material; a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these fine irregularities to exhibit roughness having an length (RSm) of 1 to 10 µm and a maximum height roughness (Rz) of 0.2 to 5 µm, as analyzed by scanning probe microscopy; a supplementary step of immersing the substrate, after being subjected to the above step, in an aqueous solution containing one type selected from among a hexavalent chromium compound, a permanganate salt, a zinc phosphate compound, ammonia, hydrazine and a water-soluble amine compound; a step of applying an epoxy adhesive onto the fine irregularities; a step of placing the substrate, having been coated with an adhesive, in an airtight vessel, depressurizing the vessel, and then pressurizing the vessel, to cause the adhesive to impregnate the substrate; and a bonding step of bonding another adherend to the ultra-fine irregularities having the epoxy adhesive applied thereon.

### BRIEF DESCRIPTION OF THE DRAWINGS

Fig. 1 is a cross-sectional view of a baking jig for baking and bonding a steel plate piece and an FRP;
Fig. 2 is a view of a test piece of a steel material composite manufactured through baking of a CFRP and a steel plate piece used for measuring the bonding strength between the steel plate piece and the CFRP based on tensile breaking;
Fig. 3 is a perspective view illustrating an example of a structure resulting from fastening a steel material composite according to the present invention and a metal structural member (angle member) using bolts and nuts;
Fig. 4 is an external view illustrating an example of a structure in which an integrated product of steel plates and an FRP is joined and fixed to a metal plate object using bolts and nuts;
Fig. 5 is a view of a test piece resulting from bonding two steel plate pieces with an epoxy adhesive used for measuring the shear breaking strength between steel plate pieces based on tensile breaking;
Fig. 6 is a view of a square steel material test piece resulting from bonding the ends of square steel bars with an epoxy adhesive, the test piece being used for measuring the tensile breaking strength between the square steel pieces based on tensile breaking;
Fig. 7(a) is an electron micrograph in magnification of 10,000 times of an SPCC steel plate piece etched with an aqueous solution of sulfuric acid and treated with an aqueous solution of hydrazine hydrate and Fig. 7(b) is an electron micrograph in magnification of 100,000 times;
Fig. 8(a) is an electron micrograph in magnification of 10,000 times of an SPCC steel plate piece etched with an aqueous solution of sulfuric acid and treated with aqueous ammonia and Fig. 8(b) is an electron micrograph in magnification of 100,000 times;
Fig. 9(a) is an electron micrograph in magnification of 10,000 times of an SPCC steel plate piece etched with an aqueous solution of sulfuric acid and subjected to a conversion treatment using an aqueous solution of potassium permanganate and Fig. 9(b) is an electron micrograph in magnification of 100,000 times;
Fig. 10(a) is an electron micrograph in magnification of 10,000 times of an SPCC steel plate piece etched with an aqueous solution of sulfuric acid and subjected to a conversion treatment using an aqueous solution of chromium trioxide and Fig. 10(b) is an electron micrograph in magnification of 100,000 times;
Fig. 11 is an electron micrograph in magnification of 100,000 times of an SPCC steel plate piece etched with an aqueous solution of sulfuric acid and subjected to a conversion treatment using an aqueous solution of zinc phosphate;
Fig. 12(a) is an electron micrograph in magnification of 10,000 times of an SPHC steel plate piece etched with an aqueous solution of sulfuric acid and subjected to a conversion treatment using an aqueous solution of potassium permanganate and Fig. 12(b) is an electron micrograph in magnification of 100,000 times;
Fig. 13(a) is an electron micrograph in magnification of 10,000 times of an SAPH steel plate piece etched with an aqueous solution of sulfuric acid and subjected to a conversion treatment using an aqueous solution of potassium permanganate and Fig. 13(b) is an electron micrograph in magnification of 100,000 times;
Fig. 14 is a set of scanning curve diagrams, obtained by scanning probe microscopy, of an SPCC steel plate piece etched with an aqueous solution of sulfuric acid and subjected to a conversion treatment using an aqueous solution of potassium permanganate;
Fig. 15 is a set of scanning curve diagrams, obtained by scanning probe microscopy, of an SPHC steel plate piece etched with an aqueous solution of sulfuric acid and subjected to a conversion treatment using an aqueous solution of potassium permanganate;
Fig. 16 is a set of scanning curve diagrams, obtained by scanning probe microscopy, of an SAPH steel plate piece etched with an aqueous solution of sulfuric acid and subjected to a conversion treatment using an aqueous solution of potassium permanganate;
Fig. 17 is an electron micrograph in magnifications of 10,000 times of an SPCC steel plate piece etched with an aqueous solution of sulfuric acid and subjected to a conversion treatment using a zinc-calcium phosphate conversion treatment solution;
Fig. 18 is an electron micrograph in magnifications of 10,000 times of an SPCC steel plate piece etched with an aqueous solution of sulfuric acid and subjected to a conversion treatment using a zinc phosphate conversion treatment solution;
Fig. 19 is an electron micrograph in magnifications of 10,000 times of an SPHC steel plate piece etched with an aqueous solution containing sulfuric acid and ammonium hydrogen bifluoride and subjected to a conversion treatment using a zinc-calcium phosphate conversion treatment solution; and
Fig. 20 is an electron micrograph in magnifications of 10,000 times of an SAPH steel plate piece etched with an aqueous solution containing sulfuric acid and ammonium hydrogen bifluoride and subjected to a conversion treatment using a zinc-calcium phosphate conversion treatment solution.

### DETAILED DESCRIPTION OF THE EMBODIMEUNTS

The elements that constitute the present invention will be explained in detail below.

### [Ferrous material]

The general steel materials or ordinary steel materials used in the present invention are so-called steel materials or ferrous materials and denote ferrous materials such as carbon steels such as rolled steel materials for ordinary structures, high-tensile steels, steels for low temperature or steel plates for nuclear reactors. The steel materials include also ferrous materials for structures used in bodies, parts and the like of various equipment, for instance, cold rolled steel materials (hereafter "SPCC"), hot rolled steel materials (hereafter "SPHC"), hot rolled steel plate for automotive structures (hereafter "SAPH"), hot rolled high-tensile steel plate for automobile working (hereafter "SPFH"), steel materials mainly used for mechanical working (hereafter "SS materials") and the like. Many of these steel materials can be pressed and machined, hence the structure and shape thereof can be freely selected when using the steel material as a part or as a main body. The ferrous material in the present invention is not limited to the above-mentioned steel materials but includes also all ferrous materials according to Japanese Industrial Standards (JIS), the International Organization for Standardization (ISO) and the like.

### [Chemical etching of ferrous materials]

Various types of corrosion such as general corrosion, pitting and fatigue corrosion are known to occur in ferrous materials. Appropriate etchants can be selected by undertaking trial and error testing of chemicals that elicit general corrosion. Records in literatures (for instance, "Kagaku Kogaku Binran (Handbook of Chemical Engineering)", Society of Chemical Engineers of Japan) indicate that general corrosion can be broadly achieved in ferrous materials by using aqueous solutions of hydrohalide acids such as hydrochloric acid or aqueous solutions of sulfurous acid, sulfuric acid or salts of the foregoing. Although corrosion rates and the way in which corrosion proceeds are affected by the amount of minority constituents such as carbon, chromium, vanadium and molybdenum, general corrosion is fundamentally elicited by the above-mentioned aqueous solutions. Basically, therefore, the dipping conditions of the ferrous material need only be modified in accordance with the type of the ferrous material.

More specifically, in the case of commercially available and widely used ferrous materials such as SPCC, SPHC, SAPH, SPFH, SS materials or the like, a degreasing agent sold for the above ferrous materials, a degreasing agent for stainless steel, a degreasing agent for aluminum alloys or a commercially available general-purpose neutral detergent is procured at first. The degreasing agent is used to prepare its aqueous solution of a concentration as per the instructions of the vendor or a concentration of several %, with its temperature being at 40 to 70°C. The steel material is then immersed in the aqueous solution for 5 to 10 minutes, followed by water rinsing (degreasing step). Preferably, the steel material is immersed next in a dilute aqueous solution of caustic soda for a short time, in order to afford good etching reproducibility, and is rinsed with water thereafter. The above processes make up a so-called preliminary basic washing step.

In the case of SPCC, preferably, an approximately 10% aqueous solution of sulfuric acid is brought to 50°C and the steel is etched through immersion in the aqueous solution for several minutes. This constitutes the etching step for obtaining micron-scale roughness. In the case of SPHC, SAPH, SPFH and SS materials, etching is preferably carried out by raising the temperature of the aqueous solution of sulfuric acid by 10 to 20°C relative to the above temperature for SPCC. Aqueous solutions of hydrohalide acids such as hydrochloric acid are also suitable for etching, while in this case part of the acid in the aqueous solutions evaporates and may corrode surrounding ferrous structures. The exhaust gas evacuated locally, moreover, must be treated somehow. In terms of cost, therefore, it is preferable to use an aqueous solution of sulfuric acid.

### [Surface treatment of ferrous materials I: water rinsing and forced drying method]

After the above-described chemical etching, the steel material is rinsed with water and dried and is then observed with an electron microscope. Substantially the entire surface appears as covered with ultra-fine irregularities shaped as an endless succession of steps having a height and septh of 50 to 500 nm and a width of several hundred to several thousand nm. Specifically, when using the aqueous solution of sulfuric acid under appropriate conditions in the chemical etching step, an irregular surface analogous to large undulations is often obtained, while at the same time a fine-texture surface having peculiar step-like ultra-fine irregularities is formed. In a case where the micron-scale roughness and ultra-fine irregularities are thus created at the same time, the steel can be used as the adherend of the present invention without further modification, by thoroughly rinsing the steel with water after the above etching, followed by water draining and quick drying at a temperature of 90 to 100°C or higher. A neat natural oxide film is formed as a result, without the surface showing any rust coloration.

The natural oxide layer by itself, however, may not afford sufficient corrosion resistance in ordinary environments, particularly in high-humidity, warm environments as are found in Japan. Thus, the steel may have to be stored in dry conditions before the bonding process. Also, the bonded composite may fail to preserve its bonding strength (adhesion) over a long enough time. An actual breaking test, conducted after exposure for one month at a site roofed but substantially outdoors (December 2006 to January 2007 in Suehiro-town, Ota-city, Gunma-prefecture, Japan), revealed some loss of bonding strength. A distinct surface stabilization treatment appears thus to be necessary in practice.

### [Surface treatment of ferrous materials II: method based on adsorption of amine-based molecules]

After the above chemical etching, the steel is rinsed with water and is then immersed in an aqueous solution of ammonia, hydrazine or a water-soluble amine compound, followed by water rinsing and drying. An amine-based substance in a broad sense, such as ammonia, remains on the steel material after the etching step. More accurately, XPS analysis of the steel material after drying reveals the presence of nitrogen atoms. Therefore, broadly defined amines including ammonia and hydrazine are found to be chemically adsorbed onto the surface of the steel material. The results of electron microscopy observations with magnification of 100,000 times reveal that a thin film-like foreign material is adhered to the surface. This hints at the formation of iron amine complexes.

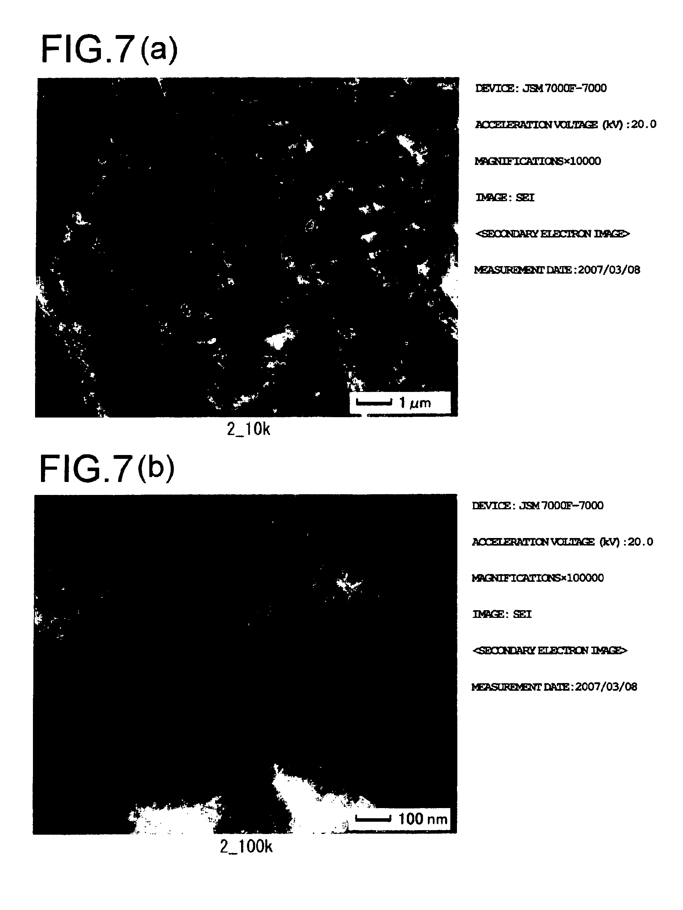

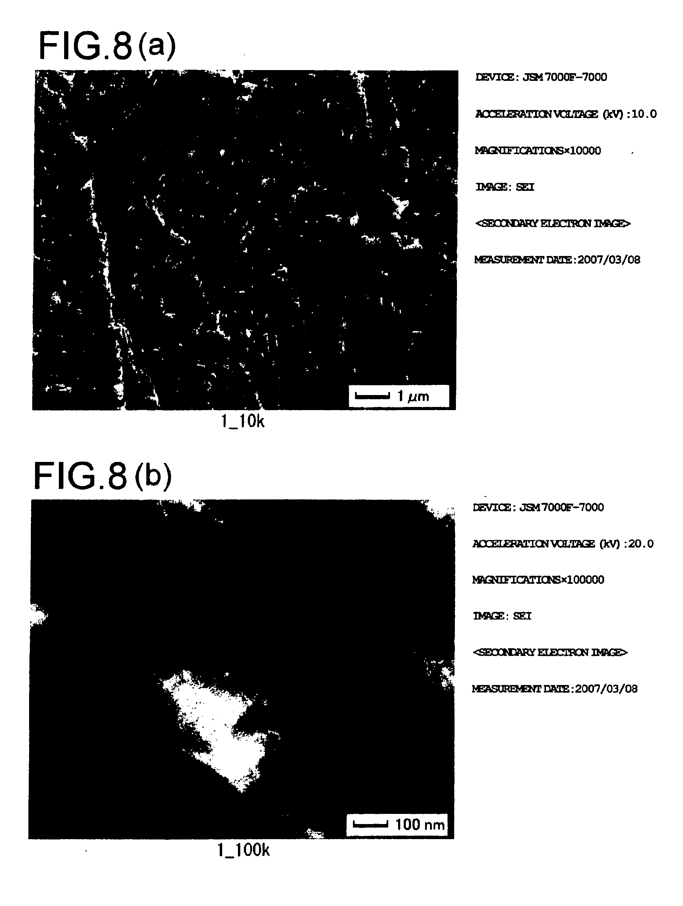

More specifically, electron micrographs with magnification of 100,000 times of a steel material obtained after immersion in aqueous ammonia and of a steel material obtained after immersion in an aqueous solution of hydrazine reveal differences in the shapes of the thin skin-like substance adhering to the steps. This can be appreciated by comparing the micrographs with magnifications of 10,000 times and 100,000 times of Figs.8(a), 8(b) and Figs.7(a), 7(b). In any case, adsorption or reaction with these amines seems to take precedence over adsorption of water molecules and hydroxide-generating reactions of iron. In this sense, the amines at least inhibit the formation of rust through adsorption of moisture and reaction therewith, for a period extending over several days to several weeks preceding the bonding operation with the epoxy adhesive. Moreover, bonding strength is expected to be preserved better after bonding than in the case of the "Surface treatment of ferrous materials I". At least no drop in bonding strength occurred in a bonded product after four weeks of being left to stand.

The concentration and temperature of the aqueous ammonia, hydrazine aqueous solution or aqueous solution of a water-soluble amine that is used need not be strictly set in most cases. Specifically, good results can be obtained through immersion in an aqueous solution having a concentration of 0.5 to several %, for 0.5 to several minutes, followed by water rinsing and drying. While some odor may be generated in an industrial setting, the aqueous solution is preferably an inexpensive approximately 1% aqueous ammonia solution or a 1% to several % aqueous solution of hydrazine hydrate having little odor and delivering a stable effect.

### [Surface treatment of ferrous materials III: conversion treatment]

As is known, corrosion resistance of a steel material can be enhanced by immersing the steel material in an acid or basic aqueous solution containing chromium, manganese, zinc or the like following the above chemical etching and subsequent water rinsing so that the surface of the steel material is covered with a metal oxide or a metal phosphate of chromium, manganese, zinc or the like. This is a well-known method for increasing the corrosion resistance of iron alloys and steel materials and it is applicable here. However, the real purpose herein is not to ensure corrosion resistance in practice to a degree that can be deemed as complete but rather achieving a level of corrosion resistance that allows avoiding damage, at least until the bonding step, so that damage is less likely to occur in the bonded portion over time thanks to a corrosion resistance treatment, such as coating or the like, performed on the integrated product after bonding. In short, a thicker conversion coating is desirable in terms of corrosion resistance but undesirable from the viewpoint of bonding strength. The inventors have found that, although the conversion coating is necessary, excessive thickness of the latter results in weaker bonding strength.

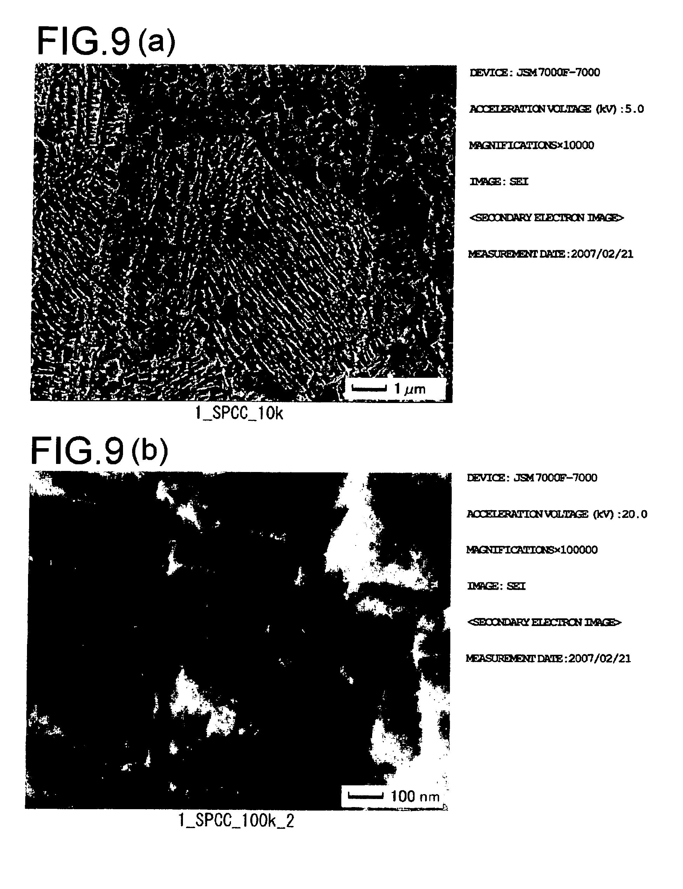

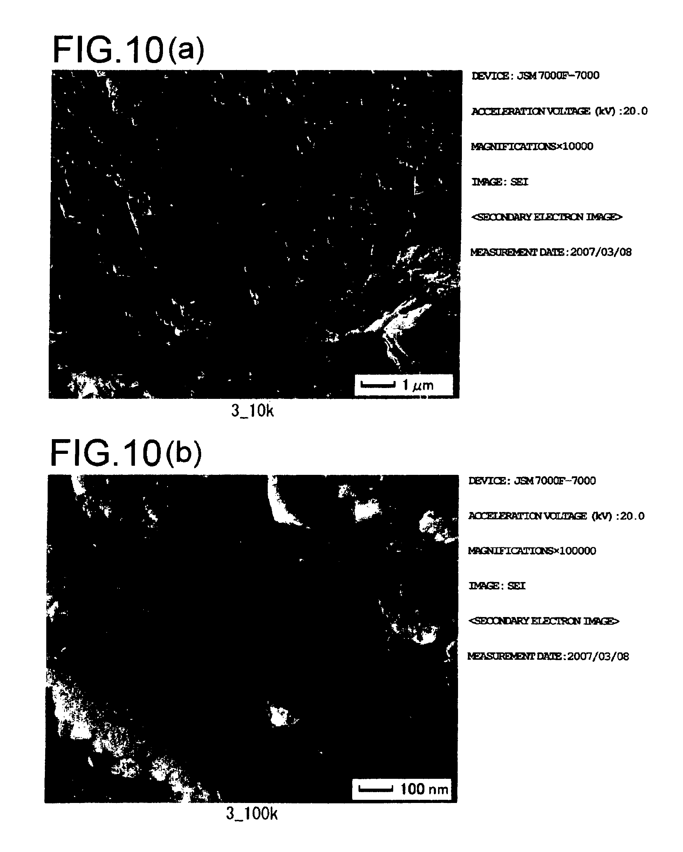

Specific methods for actually eliciting corrosion resistance will be described below. When the steel is immersed in a dilute aqueous solution of chromium trioxide as the conversion treatment solution, followed by water rinsing and drying, the surface is found to be covered with chromium (III) oxide. Figs. 10(a) and 10(b) illustrate examples of electron micrographs of such a surface. Fig. 10(a) is a micrograph with magnification of 10,000 times and Fig. 10(b) is a micrograph with magnification of 100,000 times. As can be seen in the micrographs, the surface was not covered with a uniform film but appeared to be strewn with protrusions of diameter ranging from 10 to 30 nm and similar height spaced at a distance of about 100 nm between protrusions. Preferably, a several % aqueous solution of potassium permanganate adjusted to weak acidity is used. Figs. 9(a) and 10(b) illustrate examples of electron micrographs obtained in this case. The surface, of which it is difficult to describe, was spotted with foreign materials (lacking regularity and appearing as mere gelled dirt adhering to the surface).

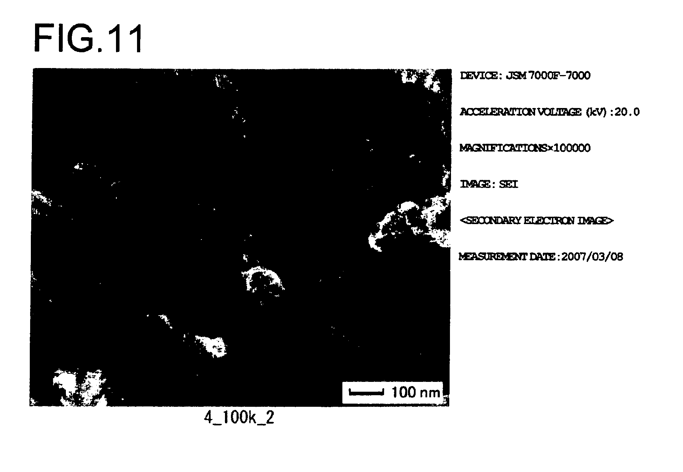

SPCC steel was subjected to a conversion treatment by being immersed in an aqueous solution of zinc phosphate and electron micrographs of the resulting surface were taken. Fig. 11 illustrates such micrographs with magnification of 100,000 times. Foreign material adhered mainly to the vicinity of the corners of stepped shapes, while the flat portions of the steps were also sparsely dotted with small protrusions having a diameter from 10 to 30 nm. In all cases, the aqueous solution temperature is preferably set to 45 to 60°C and the SPCC is immersed for 0.5 to several minutes, rinsed with water and then dried, in order to achieve thereby high bonding strength. For this sake, the resulting conversion coating is thin. The change elicited by the conversion treatment agent could not be observed in an electron micrograph with low-magnification of 10,000 times.

### [Surface treatment of ferrous materials IV: silane coupling agent]

Numerous inventions have been proposed for treatment methods for imparting corrosion resistance and weatherproof property to steel materials. Known methods among these include adsorption of a silane coupling agent. Silane coupling agents are compounds having both hydrophilic and hydrophobic groups in the molecule. When a steel material is immersed in a dilute aqueous solution of a silane coupling agent and is then rinsed with water and dried, the hydrophilic groups of the silane coupling agent become adsorbed onto the hydrophilic surface of the steel material. As a result, the entire steel material becomes covered with the hydrophobic groups of the silane coupling agent. When an epoxy adhesive is used with the silane coupling agent adsorbed like that, the aggregate hydrophobic groups of the silane coupling agent that cover the steel material allows preventing water molecules from getting near the steel material, even though the water molecules may intrude into the extremely thin gaps of the order of several tens of nm generated between the cured adhesive and the surface of the steel material.

This treatment can potentially afford corrosion resistance that is comparable to that of surface treatment II and surface treatment III and higher than that of surface treatment I. Experimental demonstration of that effect, however, requires long-term testing. The inventors used all the methods according to the above-described surface treatment I, surface treatment II, surface treatment III and surface treatment IV in short-term durability experiments. Fracture data (shear fracture data) after at least about one week (January 2007, in a roofed building in Ota-city, Gunma-prefecture, Japan) from adhesive bonding revealed strength substantially identical to the initial one. After four weeks, however, the surface treatment I exhibited lower shear breaking strength. Exposure testing over longer periods of time should allow determining the optimal method in practice. However, steel materials ordinarily used are coated in practice. Thus, long-term environmental testing will be required that involves coating of selected candidates from among uncoated test pieces.

### [Epoxy adhesive and application thereof]

There are excellent commercially available epoxy adhesives. Likewise, raw materials can be easily procured to produce an epoxy adhesive from scratch. Commercially available epoxy resins include, for instance, bisphenol epoxy resins, glycidylamine epoxy resins, polyfunctional polyphenol-type epoxy resins, alicyclic epoxy resins and the like. Any of these can be used as the material employed in the present invention. It is also possible to use these epoxy resins joined among them each other through reaction with a polyfunctional third component, for instance a polyfunctional oligomer having a plurality of hydroxyl groups. In the present invention, the epoxy adhesive is preferably obtained by mixing an epoxy resin with a polyfunctional amine compound added as a curing agent to the epoxy resin.

Preferably, an elastomer component, a filler component and the like are added to the above component, in terms of bringing the coefficient of linear expansion of the component to be comparable to that of the metal alloy or close to that of a CFRP material as well as achieving a buffer material upon application of a thermal shock. In terms of enhancing impact resistance and thermal shock resistance, the elastomer component is preferably mixed by an amount ranging from 0 to 30 parts by mass (no more than 30 parts by mass) relative to a total 100 parts by mass of the resin fraction (epoxy resin component + curing agent component). An excess of elastomer component beyond 30 parts by mass results in a drop in bonding strength, hence is undesirable. A vulcanized rubber powder having a particle size of 10 to 60 µm is an example of the elastomer component. Elastomer component particles having a size of 10 µm or greater are too large to intrude into the ultrafine recesses on the steel material during application of the adhesive. The particles remain thus in the adhesive layer and do not affect the anchor portions. As a result, there is no drop in bonding strength, while resistance to thermal shocks is an added benefit.

Although any type of vulcanized rubber can be used, in practice it is difficult to pulverize rubber into particles of about 10 µm, regardless of rubber type. The inventors looked into the matter but found that there is little research and development being carried out on methods for manufacturing microparticle-vulcanized rubber. The inventors adopted a method that involved mechanical crushing and sorting of rubber vulcanized products, rubber unvulcanized products and thermoplastic resins having been cooled in liquid nitrogen. Unfortunately, issues of manufacturing efficiency and costs associated with this method negate the commercial feasibility of the method. Another approach involves using unvulcanized or semi-crosslinked rubber and modified super engineering plastics or polyolefin resins. Examples of modified super engineering plastics include, for instance, a hydroxyl group-terminated polyether sulfone "PES100P (by Mitsui Chemicals, Tokyo, Japan)". The polyolefin resin used is preferably an already-developed polyolefin resin that mixes readily with epoxy resins.

The inventors consider that the durability of powder unvulcanized rubber against thermal shock is inferior to that of powder vulcanized rubber theoretically, although this is not yet well understood. In actual situation, the evaluation method itself has not been yet fully established by the inventors. In any case, including unvulcanized elastomers in the mixture elicits resistance against thermal shock. Examples of such polyolefin resins include, for instance, maleic anhydride-modified ethylene copolymers, glycidyl methacrylate-modified ethylene copolymers, glycidyl ether-modified ethylene copolymers, ethylene-alkyl acrylate copolymers and the like.

Examples of maleic anhydride-modified ethylene copolymers that can be used include, for instance, maleic anhydride graft-modified ethylene polymers, maleic anhydride-ethylene copolymers, ethylene-acrylate-maleic anhydride terpolymers and the like. Particularly preferred among the foregoing are ethylene-acrylate-maleic anhydride terpolymers, as these allow obtaining superior composites. Concrete examples of ethylene-acrylate-maleic anhydride terpolymers include, for instance, "Bondine(TM) by Arkema".

As the glycidyl methacrylate-modified ethylene copolymers, glycidyl methacrylate graft-modified ethylene polymers and glycidyl methacrylate-ethylene copolymers can be used. Particularly preferred among the foregoing are glycidyl methacrylate-ethylene copolymers, as these allow superior composites to be obtained. Specific examples of glycidyl methacrylate-ethylene copolymers include, for instance, "Bond First(TM) by Sumitomo Chemical (Chuo-ward, Tokyo, Japan)". Examples of glycidyl ether-modified ethylene copolymers that can be used include, for instance, glycidyl ether graft-modified ethylene copolymers and glycidyl ether-ethylene copolymers. Specific examples of ethylene-alkyl acrylate copolymers include, for instance, "Lotryl(TM) by Arkema".

### [Filler]

The filler will be explained next. Preferably, an epoxy adhesive composition is used that further comprises 0 to 100 parts by mass (no more than 100 parts by mass), more preferably 10 to 60 parts by mass (no more than 60 parts by mass), of a filler, relative to a total 100 parts by mass of resin fraction including the elastomer component. Examples of the filler that is used include, for instance, reinforcing fiber-based fillers such as carbon fibers, glass fibers, aramid fibers and the like; or a powder filler such as calcium carbonate, mica, glass flakes, glass balloons, magnesium carbonate, silica, talc, clay, as well as pulverized carbon fibers and aramid fibers. Adjustment of a specific epoxy adhesive will be explained next. An adhesive composition (uncured epoxy adhesive) is obtained by thoroughly mixing an epoxy resin main material, a curing agent, an elastomer and a filler, where a small amount of a solvent (commercially available ordinary solvent) for epoxy adhesives, depending on the viscosity. The adhesive composition is applied on required portions of a metal alloy part obtained in a previous process. The adhesive composition may be applied manually, with a brush, or automatically, using a coating machine.

### [Processing after application of the epoxy resin adhesive]

After coating on the required surface, the metal alloy part is placed in a vacuum vessel or a pressure vessel. It is preferable to adopt the way where the pressure in the vessel is reduced to near vacuum and after several minutes air is infused to revert the vessel to normal pressure. Alternatively, it is preferable to adopt the way where no depressurization is carried out and the pressure is increased to several atmospheres to several tens of atmospheres, after which pressure is reverted to normal pressure. Further, it is also preferable to adopt the way where a cycle of depressurization and pressurization is repeated. Air or gas in the interstices between the coating material and the metal alloy is evacuated as a result, which makes it easier for the coating material to penetrate into ultrafine recesses. A method employing high-pressure air in a pressure vessel entails high costs in terms of equipment and expenses for actual mass production. Therefore, carrying out one cycle or repeated several cycles of depressurization and return to normal pressure using a vacuum vessel should be more economical. In the case of the metal alloy of the present invention, sufficiently stable bonding strength can be achieved through several cycles of reduced pressure and return to normal pressure. After being removed from the vacuum vessel, the steel material composite is preferably left to stand for about 30 minutes or more in an environment at normal temperature or at a temperature of about 40°C. This makes it possible to evaporate a substantial part of solvent that may have been added to the epoxy adhesive composition.

### [FRP prepreg]

The most lightweight and high-strength CFRP can be effectively used in the present invention, as explained below. A commercially available CFRP prepreg can be used without further modification. Examples of commercially available CFRP prepregs that can be used include, for instance, prepregs in which the above-described epoxy adhesive is impregnated into a carbon fiber cloth and prepregs in which a provisional film comprising the uncured epoxy resin is once formed and is then overlaid on the carbon fiber cloth. Also, CFRP prepreg can be easily produced from scratch by using a one-liquid epoxy adhesive and a carbon fiber cloth. The epoxy resin used is often a dicyandiamide-cured or amine-cured epoxy resin, in a B-stage (uncured state close to solid) at normal temperature. The epoxy resin melts then through a rise in temperature to hundred and several tens of degrees, after which the epoxy resin becomes cured.

In this sense, preferably, the curing temperature characteristics of the epoxy adhesive that is coated onto the steel material part coincides with the curing temperature characteristics of the epoxy uncured resin (adhesive) used for the CFRP prepreg. In experiments conducted by the inventors, strong bonding strength was achieved in the thermally cured prepregs even without particularly adjusting the curing temperature characteristics. Accordingly, further study into this aspect should result in yet better integrated products. At first prepreg parts are prepared through cutting into a required shape and overlaying in a required form. When using a stack of a plurality of plies of unidirectional prepreg (prepreg comprising a web weaved with substantial warp but very little weft), the directionality of the strength in the ultimately obtained CFRP sheet material can be controlled by overlaying the fiber directions of the prepreg plies and/or by overlaying the plies at an angle. Such assembly requires therefore considerable know-how. The warp-weft counts are identical in articles obtained through formal weaving of carbon fibers. Equal strength in all directions seems to be achieved by overlaying prepregs alternately changing the angle between plies by 45 degrees. In short, the required number of plies and the overlaying scheme are designed beforehand and then the prepregs are cut and overlaid in accordance with the design. This completes the preparation of the prepregs.

### [Method for laminating prepregs and manufacturing a composite]

The above-described FRP prepreg is laid on a steel material part having been coated with the above-described epoxy adhesive. When the whole is heated in this state, the epoxy resin in the epoxy resin adhesive and in the prepreg melts once, turns into gel state and becomes subsequently cured. To firmly bond the steel material part and the prepreg, these are heated in a state pressed against each other. In order to join these securely, air trapped in gaps between the steel material part and the prepreg must be driven out during melting of the resin, by heating them in the state where both are pressed against each other. For instance, a support base is manufactured beforehand in accordance with the rear face shape of the face to be bonded of the steel material part, a polyethylene film or aluminum foil is laid over the base and then the steel material part is placed thereon. A prepreg is laid on the steel material part and a polyethylene film is laid on the prepreg. Then, a fixing member such as a structural member or the like, manufactured separately in accordance with prepreg shape for the ultimately obtained CFRP, is placed on the polyethylene film. A weight is further placed on the whole to enable pressing and fixing during thermal curing.

Obviously, the steel material part and the prepreg need only be cured while pressing against each other, hence various pressing methods can be employed other than using the weight of a load. In aircraft members, an entire assembly is sealed in a heat-resistant film bag and is heated under reduced pressure, in such a manner so as to forcibly drive out air from the interior upon melting of the entire epoxy fraction. Prepreg becomes compacted as a certain amount of air is evacuated. Thereafter, air is fed back into the film bag, so that curing takes place under heightened pressure. The inventors lacked experimental equipment to replicate the above procedure, thus the tests were carried out assuming that air trapped in the prepreg was substantially driven out on account of the pressure exerted during melting of the epoxy fraction. Heating of the entire assembly is accomplished by placing the assembly in a hot-air dryer or an autoclave, where the whole is heated ordinarily at a temperature of 110 to 140°C for several tens of minutes, over which the adhesive component melts once and subsequently gels. Preferably, the temperature is then raised to 150 to 170°C, at which heating further proceeds for several tens of minutes, to bring about complete curing. The optimal temperature conditions vary depending on the epoxy component and the curing agent component. After thermal curing and subsequent cooling, the molded product is removed from the metallic mold for injection molding. When the above-described polyethylene films or aluminum foils for enabling smooth demolding are used, these are likewise removed.

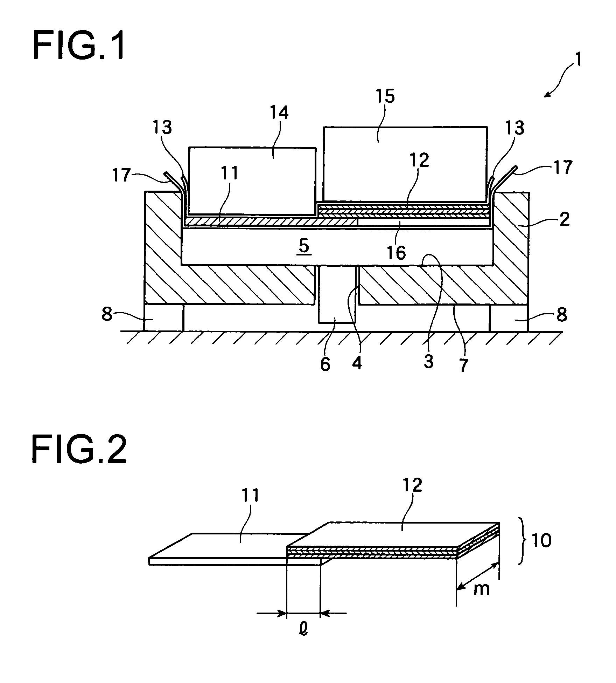

Fig. 1 is a cross-sectional diagram of a baking jig for baking and bonding a steel plate piece and an FRP. Fig. 2 illustrates an integrated steel material composite 10 of a steel plate piece and a CFRP as a test piece, produced through baking of a steel plate piece 11 and a CFRP 12 in the baking jig 1. The baking jig 1 is a fixing jig used during baking of the CFRP prepreg and the steel plate piece 11. The top face of a mold body 2A is open with a rectangular mold recess 3 formed. A mold through-hole 4 is formed at the bottom of the mold body 2. A bottom plate projection 6 of a mold bottom plate 5 is inserted into the mold through-hole 4. The bottom plate projection 6 projects out of a mold bottom plate 7 of the mold body 2. The bottom face of the mold body 2 rests On a mold seat 8. The baking jig 1 is a jig for manufacturing a steel material composite 10 through baking of the steel plate piece 11 and the CFRP 12, which are bonded to each other as illustrated in Fig. 2, with the mold bottom plate 5 inserted in the mold recess 3 of the mold body 2 as illustrated in Fig. 1.

The steel material composite 10, as a test piece, is manufactured in accordance with the procedure outlined below. At first, a demolding film 17 is laid over the entire surface of the mold bottom plate 5. In the present example, a 1.6 mm-thick steel plate piece 11 and a plate-like PTFE spacer 16 are placed on two sheets of the demolding film 17. Then, three plies of weaved cloth-like carbon fibers (T-300 produced by Toray, Tokyo, Japan), made of PTFE (polytetrafluoroethylene resin) and cut into a desired size, are laid on the end of the steel plate piece 11 and on the PTFE spacer 16. A volume of about 1 cc of an uncured epoxy adhesive (EP-106) is discharged out of a syringe into the carbon fiber cloth, to impregnate the latter and produce thereby the CFRP prepreg.

After layering the CFRP prepreg, a demolding film 13, which is a polyethylene film for demolding, is further laid on the steel plate piece 11 and the uncured CFRP prepreg. Then PTFE blocks 14, 15 made of PTFE, as weights, are placed thereon. A weight (not shown) of several hundred g is further placed, as the case may require, on the PTFE blocks 14, 15. The whole in this state is then transferred into a baking oven, where the uncured CFRP prepreg is cured. After cooling, the weights, the seat 8 and so forth are removed and the lower end of the bottom plate projection 6 is pushed against the floor, to remove the steel material composite 10 (Fig. 2) obtained through bonding of the steel plate piece 11 and the CFRP, along with the demolding films 13, 17. The PTFE spacer 16 and the demolding films 17, 13 are non-adhesive materials and can thus be easily stripped off the CFRP 12.

### [Examples of composite use]

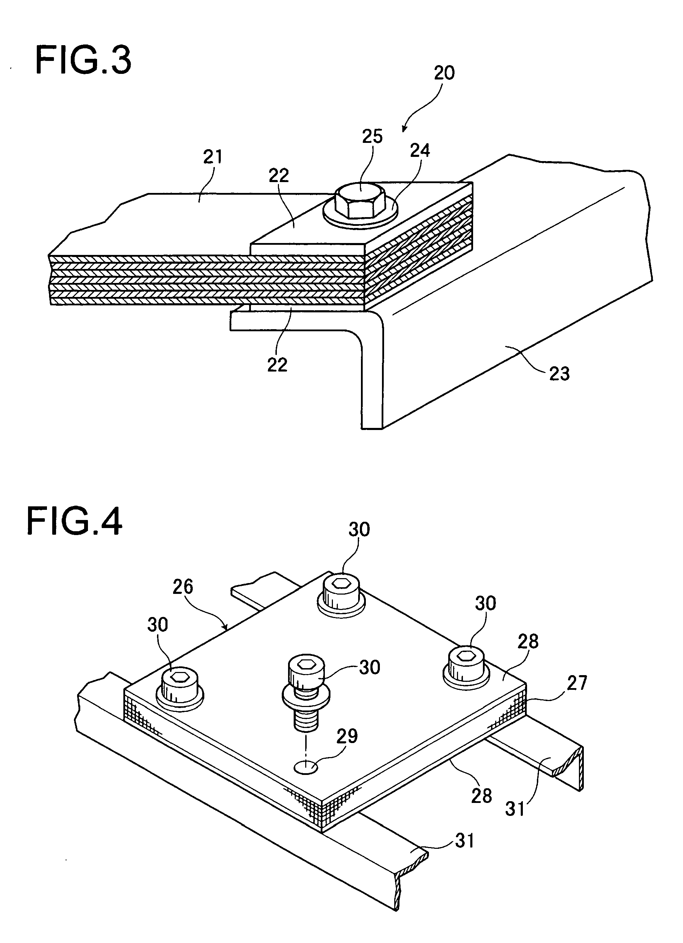

Fig. 3 is a perspective view illustrating an example of a structure resulting from fastening the steel material composite according to the present invention and a metallic structural member (angle member) using bolts and nuts. A steel material composite 20 is an integrated composite of steel material and CFRP. The CFRP 21 is a plate-like structure manufactured through baking of prepreg. The angle member 23 for structures is an already-manufactured structural member. Rectangular reinforcing plate materials 22 are integrally bonded to the front and rear faces at the ends of the CFRP 21. The reinforcing plate materials 22, made of steel plate, are baked and integrally bonded beforehand to the CFRP 21 in accordance with the above-described bonding method.

The CFRP 21, the reinforcing plate materials 22 integrally bonded to the front and rear faces of the CFRP 21 and the angle member 23 are fixed together by way of a washer 24 disposed on the upper side of the reinforcing plate materials 22 and a washer and nut (not shown) disposed on the underside of the angle member 23, in such a manner so as to be prevented from moving relative to each other by means of a bolt 25. The steel material composite 20, resulting from bonding the CFRP 21 and the rectangular reinforcing plate materials 22 made of the steel material, is an integrated product obtained using strong adhesion. Therefore, the compressive forces exerted by the bolt 25 and the washer 24 on the reinforcing plate materials 22 are distributed uniformly over the CFRP 21. In brief, only the reinforcing plate materials 22 made of steel material are deformed, even when the bolt 25 and the nut are fastened with a strong fastening force, so that the CFRP 21 in the steel material composite 20 remains undamaged. As described above, the steel material and the CFRP can be bonded strongly to each other in the steel material composite and manufacturing method thereof according to the present invention.

Fig. 4 illustrates an example of the use of CFRP in which thin steel material plates are bonded to the front and rear faces of a flat plate-like CFRP. A composite plate material 26 has a three-layer structure in which a CFRP 27 is disposed as a core layer and thin steel material plates 28 are bonded to the front and rear faces of the CFRP 27 respectively. Through-holes 29 are formed in the composite plate material 26. Bolts 30 are inserted through the through-holes 29, run through metallic angle members 31 having an L-shaped cross section and disposed below the composite plate material 26 and are screwed into nuts (not shown). The composite plate material 26 and the angle members 31 make up a united structure. The steel material plates 28 are bonded to the front and rear faces of the CFRP 27, hence the CFRP 27 is not damaged on account of, for instance, the fastening pressure exerted by the bolts 30 or through friction with the bolts 30 even if it is fastened by the bolts 30. The composite plate material 26, therefore, brings out the characteristics of both the CFRP 27 and the steel material thin plates 28 and can thus make up a structure that is lightweight and mechanically strong. The bonding strength with epoxy resins can be dramatically increased by accurately designing and controlling the surface of the steel material. Novel machining methods and assembly methods are expected to be made possible by virtue of such a bonding strength.

As can be understood from the above usage example of the CFRP and of the steel material, the steel material composite can be used to construct lightweight and strong structures, parts and the like in which a steel material and CFRP are strongly integrated with each other. That is, shaping of the steel material portion is comparatively free. Also, steel materials can be joined to each other according to conventional joining methods peculiar to metallic materials, such as fastening with bolts/nuts and screws. The CFRP part, moreover, can be easily worked into shaped products, such as plate-like and pipe-like products, rather than complex-shaped products. Therefore, assembly with bolt, nuts and screws is facilitated by making the ends of the steel material composite into known structural articles of steel materials. The steel material composite can thus be used as an easy-to-assemble/disassemble member in ordinary buildings or mechanical structures.

As explained in detail above, the steel material composite and manufacturing method thereof according to the present invention provide, for instance, light weight and tough parts, structures or the like, in which a steel material and FRP are strongly integrated together. In particular, assembly and disassembly is extremely easy when the steel material composite, in which its main structure is CFRP or the like and its ends or joining portion are steel material parts, is used as the steel material part in buildings, equipment bodies, machinery parts, various mechanisms or the like. Besides lightening of weight, the steel material composite can potentially afford lower costs as well as energy and resource savings.

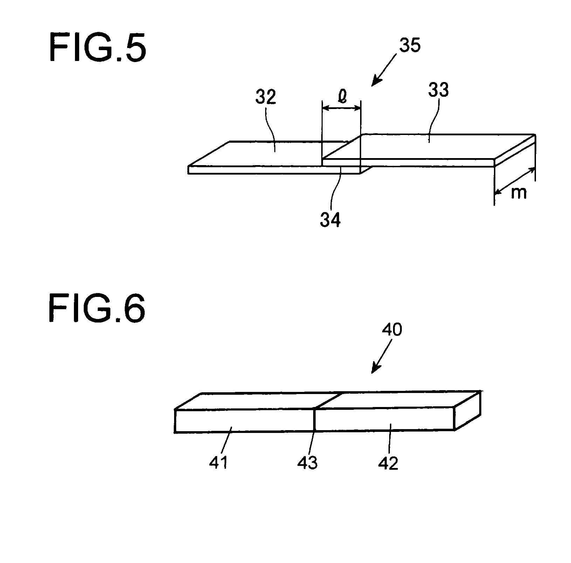

Embodiments of the present invention will be explained below based on working examples. Fig. 2 is a perspective view of a test piece, for which the shear breaking strength of a composite of a steel material and a CFRP is measured. Fig. 5 is a perspective view of a test piece, for which the shear breaking strength of a composite of steel materials bonded using an adhesive is measured. Also, Fig. 6 is a perspective view of a test piece resulting from bonding the ends of square steel bar pieces machined to a square bar shape, wherein the tensile breaking strength of the test piece is measured. The following instruments were used for measurements and so forth in the specific working examples described below.
(a) X-ray surface observation (XPS observation) ESCA "AXIS-Nova (by Kratos Analytical/Shimadzu (Kyoto, Japan)", was used to observe the constituent elements to a depth of 1 to 2 nm over a surface area several µm across.
(b) Electron beam surface observation (EPMA observation) An electron probe microanalyzer "EPMA1600 (by Shimadzu)" was used to observe the constituent elements to a depth of several µm over an area several µm across.
(c) Electron microscopy
   Observations were carried out at 1 to 2 kV using an SEM electron microscope "JSM-6700F (by JEOL, Tokyo, Japan)".
(d) Scanning probe microscopy
   "SPM-9600 (by Shimadzu)" was used.
(e) Measurement of composite bonding strength

A tensile tester "Model 1323 (Aikoh Engineering, Osaka, Japan)" was used, to measure shear breaking strength at a pulling rate of 10 mm/minute. Working examples of the present invention will be explained below as experimental examples for bonding strength testing.

### [Working Examples]

Experimental examples will be described below as working examples.

### [Experimental example 1] (Steel material and adhesive)

A commercially available 1.6 mm-thick plate material of a cold rolled steel material "SPCC bright" was procured and was cut into 18 mm × 45 mm rectangular steel plate pieces. A hole was formed at an end of each steel plate piece, a PVC-coated copper wire was threaded through each hole of a dozen of the steel plate pieces and then the copper wires were bent to suspend simultaneously all the pieces in such a manner as to prevent the latter from becoming stacked on one another. An aqueous solution containing a commercially available degreasing agent "NE-6 (by Meltex)" for aluminum alloys by 7.5% and set to a temperature of 60°C was prepared in a bath. The steel plate pieces were immersed for 5 minutes in the aqueous solution and were then rinsed with public tap water (Ota-city, Gunma-prefecture, Japan). Next, the steel plate pieces were immersed for 1 minute in another dipping bath of a 1.5% aqueous solution of caustic soda at 40°C and were rinsed with water. An aqueous solution containing 98% sulfuric acid by 10% was prepared next at 50°C in another dipping bath. The steel plate pieces were immersed for 6 minutes in the aqueous solution and were then thoroughly rinsed with deionized water. The pieces were then dried for 15 minutes in a hot-air dryer at 90°C.

Two days later, the pieces were observed with an electron microscope and a scanning probe microscope. Electron microscopy results with magnification of 100,000 times showed that substantially the entire surface was covered with ultra-fine irregularities shaped as an endless succession of steps having a height and length of 50 to 500 nm and a width of several hundred to several thousand nm. A scanning analysis using a scanning probe microscope revealed roughness having an average length (average distance between peaks and valleys in the roughness curve) RSm of 1 to 3 µm and a maximum height roughness Rz of about 0.3 to 1.0 µm. On the same day, the steel plate pieces were taken out and the ends thereof were thinly coated with a commercially available liquid, one-liquid type of dicyandiamide-cured epoxy adhesive "EP-106 (by Cemedine)". The pieces were placed in a desiccator, with the coated surface facing up, and the desiccator was evacuated to 3 mmHg using a vacuum pump. One minute after evacuation, air was let in to revert the pressure to normal pressure. The operation of reverting to normal pressure after depressurization was repeated three times and then the steel plate pieces were removed from the desiccator.

The faces coated with the adhesive were stacked onto each other so as to leave a bonding surface area therebetween of about 0.5 cm² and the pieces were fixed with two clips. The pieces were placed in a hot-air dryer at 135°C, where they were heated. After 40 minutes, the temperature setting of the hot-air dryer was changed to 165°C, to raise the temperature. Once the temperature of 165°C was attained, it was kept for 20 minutes, after which the hot-air dryer was switched off and left to be cooled with the door open. As a result an integrated product of two steel plate pieces bonded to each other was obtained, as illustrated in Fig. 5. Two days later, the bonded pieces were subjected to a tensile breaking test. The shear breaking strength averaged over four sets was very high of 49 MPa. Three pairs of the bonded steel plate pieces not used in the breaking test were left to stand for four weeks within the term from December 2006 to January 2007 in a factory which is located in Ota-city, Gunma-prefecture, Japan. That winter was warmer and rainier than usual. After it, a breaking test revealed a dramatic decrease in shear breaking strength to 30 MPa, which can be attributed to changes in the surface of the steel material caused by intruding moisture.

### [Experimental example 2] (Steel material and adhesive)

SPCC steel plate pieces were treated in exactly the same manner as the treatment method in experimental example 1 up to halfway. Specifically, the pieces were etched with an aqueous solution of sulfuric acid and were then rinsed with water in exactly the same way. After rinsing, the pieces were immersed for 1 minute in a 3.5% aqueous solution of hydrazine monohydrate at 25°C, followed by thorough water rinsing. The pieces were then dried for 15 minutes in a warm-air drier at 67°C. One of the obtained steel plate pieces was subjected to an XPS analysis, which clearly revealed the presence of nitrogen atoms. Figs. 7(a) and 7(b) illustrate observation results using an electron microscope with magnifications of 10,000 times and 100,000 times, respectively. Thereafter, the ends of the SPCC steel plate pieces were bonded to each other using the epoxy adhesive "EP-106", in exactly the same way as in experimental example 1. The shear breaking strength in a tensile breaking test was 65 MPa. Three pairs of the steel plate pieces bonded at the ends and not used in the breaking test were left to stand for four weeks on a shelf in a factory. The pieces were left to stand within the term from January to February 2007, in a factory located in Ota-city, Gunma-prefecture. A breaking test performed four weeks after it revealed a shear breaking strength of 63 MPa. This variation was not significant enough to imply a change with time.

### [Experimental example 3] (Steel material and adhesive)

SPCC steel plate pieces were treated in exactly the same manner as the treatment method in experimental example 1 up to halfway. Specifically, the pieces were etched with an aqueous solution of sulfuric acid and were then rinsed with water in exactly the same way. After rinsing, the pieces were immersed for 1 minute in 1% aqueous ammonia at 25°C, followed by thorough water rinsing. The pieces were then dried for 15 minutes in a warm-air drier at 67°C. Figs. 8(a) and 8(b) illustrate electron micrographs in magnifications of 10,000 times and 100,000 times, respectively. The electron micrograph of Fig. 8(b) shows that, although the basic shape is substantially the same as in experimental example 2, the character of the thin skin-like substance adhering to the surface of the step-like irregularities is different from that of experimental example 2. Thereafter, the ends of two SPCC steel plate pieces were bonded to each other using the epoxy adhesive "EP-106", in exactly the same way as in experimental examples 1 and 2. The shear breaking strength in a tensile breaking test was 56 MPa. Three pairs of test pieces resulting from bonding steel plate pieces and not used in the breaking test were left to stand for four weeks within the term from January to February 2007 on a shelf in a factory located in Ota-city, Gunma-prefecture, Japan. A breaking test performed four weeks after it revealed a shear breaking strength of 61 MPa. This variation was not significant enough to imply a change with time.

### [Experimental example 4] (Steel material and adhesive)

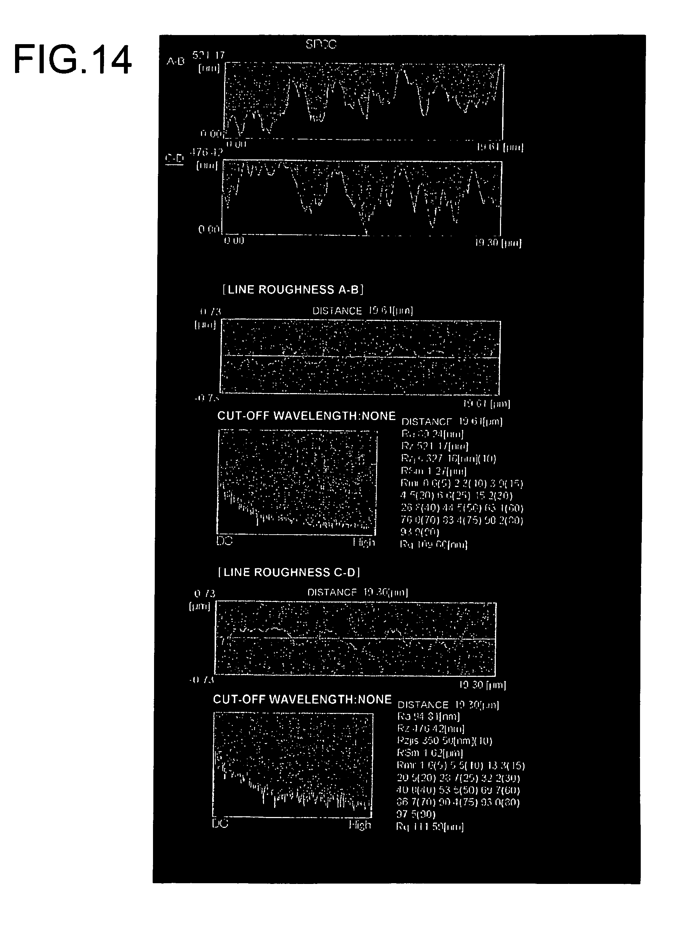

SPCC steel plate pieces were treated in exactly the same manner as the treatment method in experimental example 1 up to halfway. Specifically, the pieces were etched with an aqueous solution of sulfuric acid and were then rinsed with water in exactly the same way. After rinsing, the pieces were immersed for 1 minute in 1% aqueous ammonia at 25°C, followed by water rinsing. The pieces were then immersed for 1 minute in an aqueous solution comprising 2% potassium permanganate, 1% acetic acid and 0.5% sodium acetate hydrate at 45°C, followed by thorough water rinsing. The pieces were dried for 15 minutes in a warm-air dryer at a temperature of 90°C. Figs. 9(a) and 9(b) illustrate micrographs in magnifications of 10,000 times and 100,000 times, respectively. As illustrated in Fig. 9, the basic shape is the same as in experimental examples 2 and 3 but the character of the thin skin-like substance adhering to the surface of the step-like irregularities is different from that of experimental example 2. A scanning analysis using a scanning probe microscope revealed roughness having an average length RSm of 1.3 to 1.6 µm and a maximum height roughness Rz of about 0.4 to 0.6 µm. Fig. 14 illustrates the roughness curves (surface roughness curves).

Thereafter, the ends of two of the SPCC steel plate pieces were bonded to each other using the epoxy adhesive "EP-106", in exactly the same way as in experimental examples 1 and 2. The shear breaking strength in a tensile breaking test was 56 MPa. Three pairs of test pieces resulting from bonding steel plate pieces and not used in the breaking test were left to stand for four weeks within the term from January to February 2007 on a shelf in a factory located in Ota-city, Gunma-prefecture, Japan. A breaking test performed three weeks after it revealed a shear breaking strength of 58 MPa. This variation was not significant enough to imply a change with time.

### [Experimental example 5] (Steel material and adhesive)

SPCC steel plate pieces were treated in exactly the same manner as the treatment of example 4 up to halfway. Specifically, the pieces were etched with an aqueous solution of sulfuric acid, were then rinsed with water, were immersed in aqueous ammonia and were rinsed with water, in exactly the same way. After water rinsing, the pieces were immersed for 1 minute in an aqueous solution containing 1% of chromium trioxide at 60°C, followed by thorough rinsing with water. The pieces were dried for 15 minutes in a warm-air dryer at a temperature of 90°C. Figs. 10(a) and 10(b) illustrate electron micrographs with magnifications of 10,000 times and 100,000 times, respectively. Fig. 10(a) is an electron micrograph with magnification of 10,000 times and Fig. 10(b) is an electron micrograph with magnification of 100,000 times. As can be seen in Fig. 10(a) and Fig. 10(b), the basic shape was the same as in experimental examples 2, 3 and 4 but there the character of the thin skin-like substance adhering to the surface was different. Thereafter, the SPCC steel plate pieces were bonded to each other using the epoxy adhesive "EP-106", in exactly the same way as in experimental examples 1 and 2. The shear breaking strength in a tensile breaking test was 60 MPa. Three pairs of the bonded steel plate pieces not used in the fracture test were left to stand for four weeks within the term from January to February 2007 on a shelf in a factory located in Ota-city, Gunma-prefecture. A breaking test performed four weeks after it revealed a shear breaking strength of 61 MPa. This variation was not significant enough to imply a change with time.

### [Experimental example 6] (Steel material and adhesive)

SPCC steel plate pieces were treated in exactly the same way as in experimental example 4 but herein the pieces were immersed for 1 minute in an aqueous solution at 45°C containing 0.5% zinc nitrate and 2.4% phosphoric acid, instead of using the 1% aqueous solution of chromium trioxide. Fig. 11 illustrates an electron micrograph in magnification of 100,000 times of the obtained steel plate pieces. Fig. 11 shows that the character of the thin skin-like substance differed from that of experimental example 1. The ends of SPCC steel plate pieces were bonded using the epoxy adhesive "EP-106" in exactly the same way as in experimental example 4. The shear breaking strength in a tensile breaking test was 64 MPa. Three pairs of test pieces resulting from bonding steel plate pieces and not used in the fracture test were left to stand for four weeks within the term from January to February 2007 on a shelf in a factory located in Ota-city, Gunma-prefecture, Japan. A breaking test four weeks later revealed a shear breaking strength of 61 MPa. This variation was not significant enough to imply a change with time.

### [Experimental example 7] (Steel material and adhesive)

SPCC steel plate pieces were treated in exactly the same way as in experimental example 5. That is, the pieces were degreased, were subjected to a preliminary basic cleaning, were etched and subjected to a conversion treatment using an aqueous solution of chromium trioxide. Thereafter, the pieces were immersed for 1 minute in a 0.5% aqueous solution of a silane coupling agent γ-glycidoxypropyltrimethoxysilane "KBM-403 (by Shin-Etsu Co., Ltd. (Tokyo, Japan)", at a temperature of 25°C, followed by thorough water rinsing. The pieces were dried for 15 minutes in a warm-air dryer at a temperature of 67°C. The ends of SPCC steel plate pieces were bonded using the epoxy adhesive "EP-106" in exactly the same way as in experimental example 5. The shear breaking strength in a tensile breaking test was 64 MPa. Three pairs of test pieces resulting from bonding steel plate pieces and not used in the breaking test were left to stand for four weeks within the term from January to February 2007 on a shelf in a factory located in Ota-city, Gunma-prefecture, Japan. A breaking test four weeks later revealed a shear breaking strength of 55 MPa. This variation was not significant enough to imply a change with time.

### [Experimental example 8] (Steel material and adhesive)

A 3 mm-thick plate material of a commercial cold rolled steel material "SPCC" was procured and was machined into multiple square steel bars of 3 mm x 4 mm x 18 mm. A hole having diameters of 1.5 mm was formed at an end of each of these square steel bar pieces, a PVC-coated copper wire was threaded through the hole in each of a dozen of the pieces and then the copper wires were bent to suspend simultaneously all the pieces in such a manner as to prevent the latter from becoming stacked on one another. The subsequent treatment including epoxy adhesion, thermal curing and so forth was exactly the same as in experimental example 2. Herein, in adhesion of the square steel bar pieces, the end faces of a square steel bar piece 41 and a square steel bar piece 42 having the same shape were abutted against each other and the entire adhesion face 43 of the abutting assembly was wrapped with transparent adhesive tape (not shown). The assembly was transferred into a hot-air dryer and 500 g iron weights were placed on both ends in such a manner that the gap between the square steel bar piece 41 and the square steel bar piece 42 did not change.

The adhesive tape was stripped off the cured square steel material test piece 40. The adhesive material transferred from the adhesive tape was wiped off using a cloth damped with solvent to prepare four square steel material bar test pieces 40 as illustrated in Fig. 6. The square steel material test pieces 40 were set in a tensile tester. Tensile breaking strength was measured here instead of shear breaking strength. The cross-sectional area of 3 mm x 4 mm was 0.12 cm². The average tensile breaking strength of three sets of test pieces was 63 MPa. The numerical value was substantially identical to the shear breaking strength obtained in experimental example 2. The measured thickness of the adhesive layer at the breaking surface ranged from 0.13 to 0.17 mm.

### [Experimental example 9] (Steel material and adhesive)

A commercially available 1.6 mm-thick SPHC (hot rolled steel) plate material was procured and was cut into multiple 18 mm x 45 mm rectangular steel plate pieces. An aqueous solution at a temperature of 60°C containing a commercially available degreasing agent "NE-6 (by Meltex, Tokyo, Japan)" for aluminum alloys by 7.5% was prepared. The steel plate pieces were immersed for 5 minutes in the aqueous solution and were then rinsed with public tap water (Ota-city, Gunma-prefecture, Japan). In a separate dipping bath, the test pieces were then immersed for 1 minute in a 1.5% aqueous solution of caustic soda at 40°C, followed by water rinsing. An aqueous solution containing 98% sulfuric acid by 10% was prepared next at 65°C. The steel plate pieces were immersed for 5 minutes in the aqueous solution and were then rinsed with water. The pieces were immersed next for 1 minute in 1% aqueous ammonia at 25°C, followed by water rinsing. The pieces were then immersed for 1 minute in an aqueous solution containing 2% potassium permanganate, 1% acetic acid and 0.5% sodium acetate hydrate at 45°C, followed by thorough water rinsing. The pieces were dried for 15 minutes in a warm-air dryer at a temperature of 90°C.

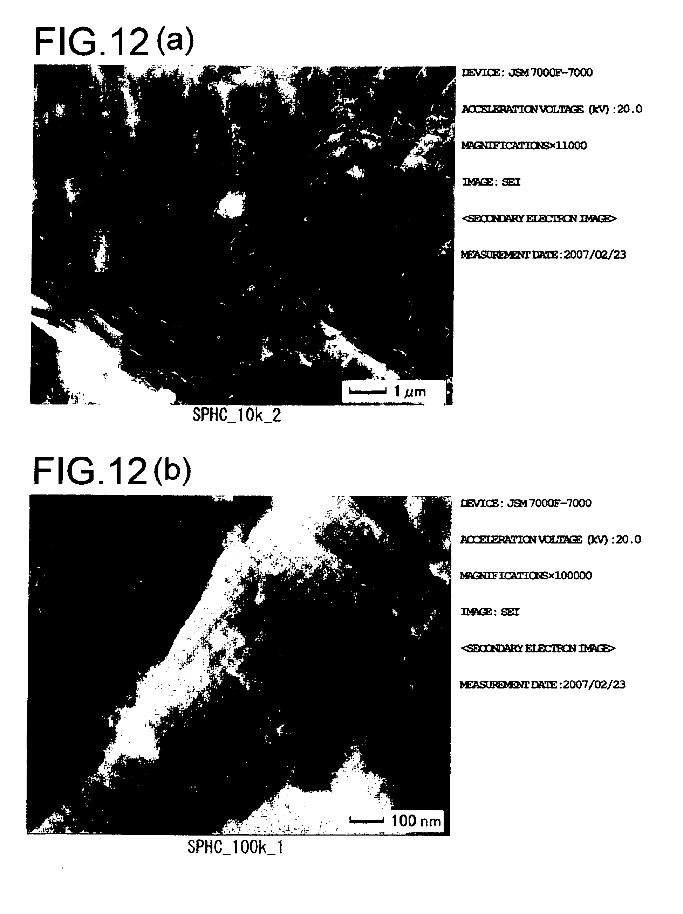

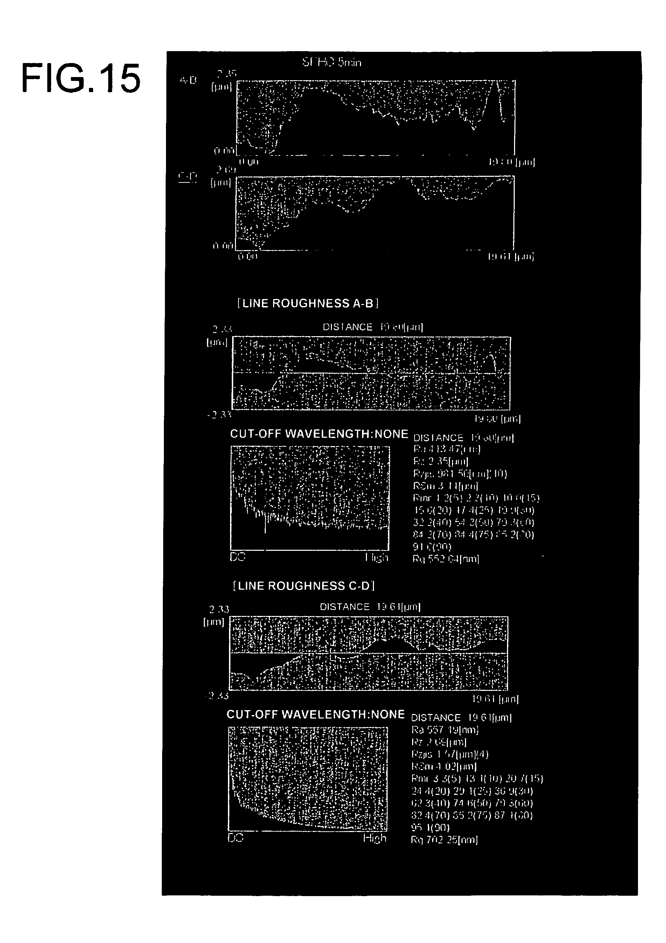

The copper wire was removed from the steel plate pieces that had been laid on clean aluminum foil. The steel plate pieces were wrapped in the aluminum foil and were stored further in a sealed polyethylene bag. Two days later, one of the pieces was observed with an electron microscope and a scanning probe microscope. Figs. 12(a) and 12(b) illustrate electron microscopy results in magnifications of 10,000 times and 100,000 times, respectively. Fig. 12 shows that substantially the entire surface is covered with ultra-fine irregularities shaped as an endless succession of steps having a height of 80 to 150 nm, a depth of 80 to 500 nm and a width of several hundred to several thousand nm. As is the case in experimental example 4, the surface is covered with a thin skin of manganese oxide. Fig. 15 illustrates an example of results of a scanning analysis performed using a scanning probe microscope. The observed roughness curve showed an average length RSm of 3 to 4 µm and a maximum height roughness Rz of about 2 to 3 µm. Thereafter, the SPHC steel plate pieces were bonded to each other using an epoxy adhesive in exactly the same way as in experimental example 1. The bonded pieces were subjected to a tensile breaking test. The shear breaking strength averaged over three sets was 61 MPa.

### [Experimental example 10] (Steel material and adhesive)

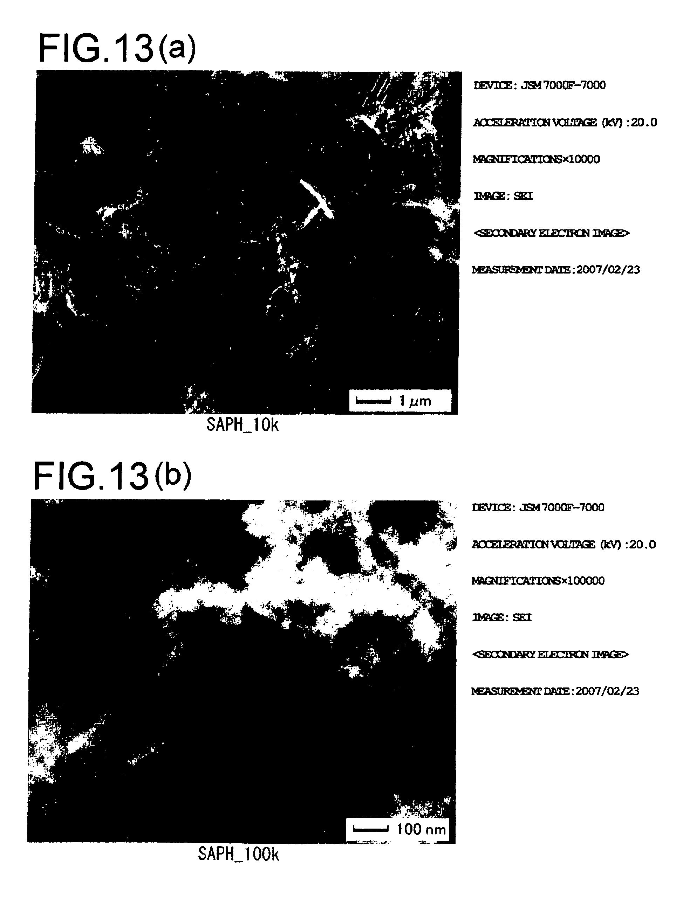

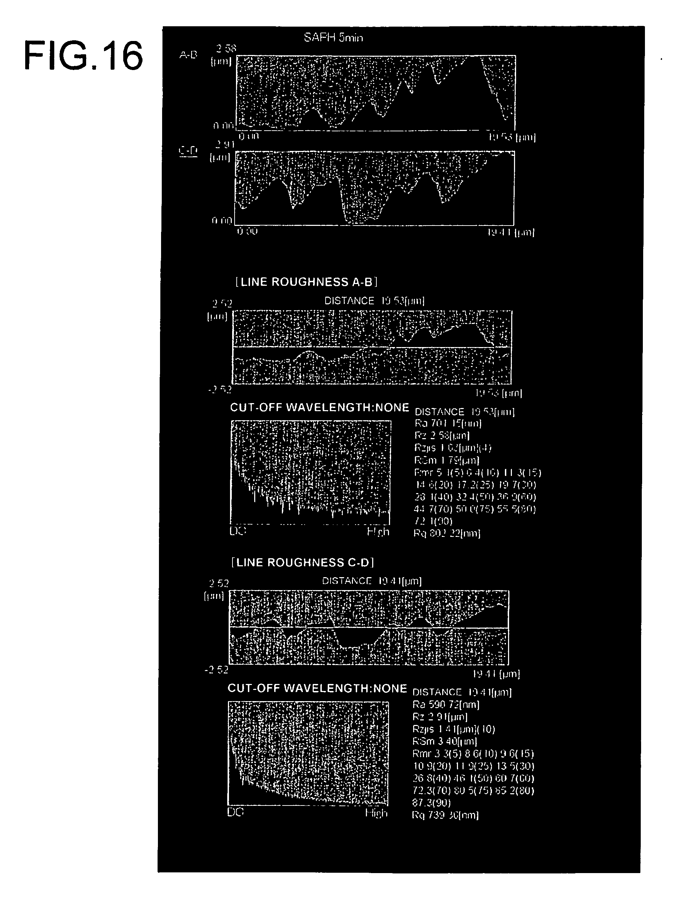

A commercially available 1.6 mm-thick plate material of SAPH 440 (hot rolled steel plate for automobiles) was procured and was cut into multiple rectangular steel plate pieces of 18 mm x 45 mm. An experiment was carried out in the exactly the same way as in experimental example 9 but using herein steel plate pieces of SAPH440 instead of SPHC. Figs. 13(a) and 13(b) illustrate electron microscopy results of the steel plate pieces in magnifications of 10,000 times and 100,000 times, respectively. The period of the step-like shapes was far finer in the case of SAPH440 than for SPHC, SPCC or the like. The surface shows ultra-fine irregularities shaped as an endless succession of steps having a height of 50 to 100 nm, a depth of 80 to 200 nm and a width of several hundred to several thousand nm. The ultra-fine irregularities appear in turn to be covered by a thin skin of manganese oxide. On the other hand, Fig. 16 illustrates an example of results of a scanning analysis performed using a scanning probe microscope. The observed roughness curve showed an average length RSm of 1.8 to 3.4 µm and a maximum height roughness Rz of about 2.5 to 3.0 µm. Bonded SAPH 440 pieces were subjected to a tensile breaking test, which yielded an average of 63 MPa over three sets.

### [Experimental example 11] (Steel material and adhesive)

A block of commercially available SS400 was machined into multiple rectangular steel plate pieces of 1.6 mm x 18 mm x 45 mm. An experiment identical to experimental example 4 was conducted but using the SS400 steel plate pieces instead of the SPHC material. Bonded SS400 pieces were subjected to a tensile breaking test, which yielded an average of 45 MPa over three sets.

### [Experimental example 12] (Adhesive)

A commercially available liquid, one-liquid type of dicyandiamide-cured epoxy adhesive "EP-106 (by Cemedine, Tokyo, Japan)" was procured. An ethylene-acrylate-maleic anhydride terpolymer "Bondine TX8030(TM) by Arkema (Paris, France)", as a polyolefin resin, was procured, was frozen at liquid-nitrogen temperature and was crushed to yield a 30 µm mesh-pass powder. Glass fibers having an average fiber diameter of 9 µm and fiber length of 3 mm "RES03-TP91 (by Nippon Sheet Glass, Minato-ward, Tokyo)" were procured and finely ground in a mortar. A polyethylene beaker was charged with 100 g of the epoxy adhesive "EP-106", 5 g of the above powdered polyolefin resin and 10 g of the above glass fibers. The whole was thoroughly stirred and left to stand for 1 hour, followed by renewed stirring to elicit thorough blending. The resulting blend was the epoxy adhesive. Tests were then performed in exactly the same way as in Experimental example 4 but using herein the obtained adhesive composition instead of "EP-106". Two days after adhesive curing, the bonded pieces were subjected to a tensile breaking test. The shear breaking strength averaged over four sets was of 63 MPa.

### [Experimental example 13] (Adhesive)

A commercially available epoxy adhesive "EP-106" was procured. A glycidyl methacrylate-ethylene copolymer "Bond First E(TM) by Sumitomo Chemical (Chuo-ward, Tokyo)", as a polyolefin resin, was procured, was frozen at liquid-nitrogen temperature and was crushed to yield a 30 µm mesh-pass powder. A polyethylene beaker was charged with 100 g of the epoxy adhesive "EP-106", 5 g of the above powdered polyolefin resin and 10 g of the glass fibers "RES03-TP91". The whole was thoroughly stirred and left to stand for 1 hour, followed by renewed stirring to elicit thorough blending. The resulting blend was the epoxy adhesive.

Experiments were then conducted in exactly the same way as in Experimental example 4 but using herein the obtained adhesive composition instead of "EP-106". A tensile breaking test was carried out two days after adhesive curing. The shear breaking strength averaged over four sets was of MPa. In the light of the present experimental example and experimental examples 4 and 12, it is evident that the magnitude of the basic bonding strength is determined by the shape and characteristics of the metal surface. The fact that the results of the present experimental example and experimental examples 4 and 12 were substantially identical is taken to suggest that the prerequisite basic performance of the adhesive itself does not change between the present experimental example and "EP-106". The adhesive in the experimental examples actually comprised an elastomer. Also, the coefficient of linear expansion of the adhesive was expected to be close to that of metals, on account of the filler that was blended in. Therefore, ordinary knowledge among forefront engineers of adhesive technology suggested that good results were to be expected after having been subjected to vibration and high temperature.

### [Experimental example 14] (Preparation of commercial-type prepreg)

**[Table 1]**

| Thermosetting resin for prepreg | | |
|---|---|---|
| Resin fraction | | Proportion (parts by weight) |
| Epoxy resin | - Brominated bisphenol A solid epoxy resin "EPC-152 by Dainippon Ink & Chemicals)" | 10.0 |
| | - Bisphenol A liquid epoxy resin "EP-828 (by Yuka-Shell Epoxy)" | 13.9 |
| | - Bisphenol F liquid epoxy resin "EPC-830 (by Dainippon Ink & Chemicals)" | 24.8 |
| Elastomer | - Weakly crosslinked carboxyl-terminated solid acrylonitrile butadiene rubber "DN-611 (by Zeon Corporation)" | 8.0 |
| | - Thermoplastic hydroxyl-terminated polyether sulfone "PES-100P (by Mitsui Toatsu Chemicals)" | 3.0 |
| Curing agent | | |
| - Tetraglycidyldiaminodiphenylmethane "ELM-434 (by Sumitomo Chemical)" | | 15.0 |
| - 4,4'-diaminodiphenyl sulfone "4,4'-DDS (by Sumitomo Chemical)" | | 25.0 |
| - BF₃-monoethylamine complex "BF₃·MEA" | | 0.3 |
| Total | | 100.0 |

A compound was obtained according to the recipe given in Table 1. This compound, which is not liquid but semi-solid at normal temperature, could be formed into a film by way of rollers. The obtained resin film was set in a prepreg machine and was pressure-bonded from both sides of unidirectionally aligned carbon fibers "T-300 (by Toray)" as reinforcing fibers, under application of pressure in accordance with known methods, to prepare a prepreg having a resin content adjusted to 38% and a fiber areal weight of 190 g/m². The prepreg was manufactured according to methods disclosed in patent documents. Prepregs sold by various vendors in Japan are presumably manufactured in accordance with similar methods. Thus, the experiment constitutes a verification of whether prepregs ordinarily sold can be used or not in the present invention.

### [Experimental example 15] (Production and evaluation of a composite)

A 6 mm-thick SPCC steel plate material was cut into rectangular pieces of 45 mm x 15 mm. The pieces were subjected to a liquid treatment in exactly the same way as in experimental example 5. That is, the pieces were degreased in an aqueous solution of the degreasing agent "NE-6" for aluminum alloys and were then rinsed with water. Next, the pieces were subjected to a preliminary basic washing using an aqueous solution of caustic soda, followed by water rinsing. The pieces were then etched with an aqueous solution of sulfuric acid, followed by water rinsing. The pieces were then immersed in aqueous ammonia, followed by water rinsing. Next, the pieces were subjected to a conversion treatment through immersion in a dilute aqueous solution of chromium trioxide, followed by water rinsing and drying in a warm-air dryer at 90°C. Commercially available liquid, one-liquid type of dicyandiamide-cured epoxy adhesive "EP-106 (by Cemedine)" was thinly coated onto the ends of the obtained steel plate pieces. The pieces were placed in a desiccator, with the coated surface facing up, and the desiccator was evacuated to 3 mmHg using a vacuum pump. One minute after evacuation, air was let in to revert the pressure to normal pressure. The operation of reverting to normal pressure after depressurization was repeated three times and then the steel plate pieces were removed from the desiccator.

A baking jig 1 for baking illustrated in Fig. 1 was prepared next. A demolding film 17, resulting from cutting a 0.05 mm-thick polyethylene film into strips, was laid in the mold recess 3. The steel plate piece 11 and a spacer 16 were then placed on the demolding film 17. Three plies of weaved cloth of carbon fibers "T-300 (by Toray)", cut separately, were overlaid, as the prepreg 12 in Fig. 1, while being coated on each of them with an epoxy adhesive "EP-106" discharged out of a syringe. The "EP-106" was used in an amount of about 1 cc. A polyethylene demolding film 13 was laid, then PTFE blocks 14, 15 made of polytetrafluoroethylene resin (hereafter, "PTFE") as weights were placed on the demolding film 13 and the whole was placed into a hot-air dryer. In the hot-air dryer, 0.5 kg iron weights were further placed on the PTFE blocks 14, 15, respectively. The dryer was energized to raise the temperature to 135°C. Heating proceeded at 135°C for 40 minutes. Then, the temperature was raised to 165°C in 5 minutes and was held there for 20 minutes. Powering to the dryer was then turned off and was left to be cooled with the door closed. On the next day, the baking jig 1 was removed from the dryer and the molded product was demolded from the baking jig 1. The polyethylene film pieces 13, 17 were stripped off to yield the steel material composite 10 illustrated in Fig. 2. The same operation was repeated to obtain a total eight steel material composites 10.

On the second day after bonding, four composites were subjected to a tensile breaking test. The CFRP portion was sandwiched between two pieces of sandpaper-roughened 1 mm-thick SUS304 stainless steel pieces. The resulting stack was clamped and fixed between chuck plates. The average shear breaking strength for four sets was very high to be 60 MPa. The bonding surface area was calculated as 1 x m, as shown in Fig. 2. The remaining four integrated bodies were clamped in the tensile tester in the same way as above and were loaded up to about 30 MPa, whereupon operation of adding tension was ceased. After 10 minutes, the chuck was loosened and the pieces were removed from the tester and left to stand. On the next day, the pieces were subjected to a tensile breaking test, which yielded an average result of 66 MPa, i.e. no drop in bonding strength was observed.

### [Experimental example 16] (Production and evaluation of a composite)

As in experimental example 15, a 1.6 mm-thick SPCC steel plate was cut into rectangular pieces of 45 mm x 15 mm to prepare test pieces for measurement of bonding strength in the same way as above. That is, an adhesive was coated onto the steel plate pieces and these were placed in a desiccator that was evacuated using a vacuum pump and reverted again to normal pressure. The operation of evacuation and reverting to normal pressure was repeated three times to prepare adhesive-coated steel plate pieces. The baking jig 1 illustrated in Fig. 1 was prepared then. The CFRP prepreg used was the same as in experimental example 15. That is, three plies of the cut prepreg of experimental example 14 were overlaid and then a polyethylene demolding film 13 was laid on top. PTFE blocks 14, 15 were then placed and the baking jig 1 was transferred into a hot-air dryer. In the hot-air dryer, 0.5 Kg iron weights were further placed on the PTFE blocks 14, 15, respectively. The dryer was energized to raise the temperature to 135°C. Heating proceeded at 135°C for 60 minutes. The temperature was raised to 165°C in 10 minutes and was held there for 40 minutes. Powering to the dryer was then turned off and was left to be cooled with the door closed.

On the next day, the baking jig 1 was removed from the dryer and the molded product was demolded from the baking jig 1. The polyethylene films were stripped off to yield the steel material composite 10 illustrated in Fig. 2. A tensile breaking test was carried out two days after bonding. The CFRP portion was sandwiched between two pieces of sandpaper-roughened 1 mm-thick SUS304 stainless steel pieces. The resulting stack was clamped and fixed between chuck plates. The average shear breaking strength for four sets was very high to be 58 MPa. The bonding surface area was calculated as 1 x m, as shown in Fig. 2. [Experimental example 17] (Steel material and adhesive) A commercially available 1.6 mm-thick cold rolled steel plate "SPCC" was procured and was cut into rectangular steel plate pieces of 45 mm x 18 mm. A through-hole was formed in the end of each of the steel plate pieces and adhering rust was removed from both faces through blasting using a sandblasting machine. A PVC-coated copper wire was threaded through the through-hole at the end of each of the steel plate pieces and then the copper wires were bent to suspend simultaneously all the steel plate pieces in such a manner as to prevent the latter from becoming stacked on one another. An aqueous solution containing commercially available degreasing agent "NE-6 (by Meltex)" for aluminum alloys by 7.5% at a temperature of 75°C was prepared in a dipping bath. The steel plate pieces were immersed in this aqueous solution for 5 minutes, followed by water rinsing.

Next, the steel plate pieces were immersed for 1 minute in another dipping bath of a 1.5% aqueous solution of caustic soda at 40°C and were thoroughly rinsed with water thereafter. An aqueous solution containing 98% sulfuric acid by 5% was prepared next at 50°C in another dipping bath. The steel plate pieces were immersed for 0.25 minutes in the aqueous solution, followed by water rinsing. Next, the pieces were immersed for 1 minute in 1% aqueous ammonia at 25°C, followed by water rinsing. In another dipping bath an aqueous solution at 65°C containing calcium nitrate by 1.3%, zinc phosphate by 0.5%, zinc nitrate by 0.5%, 80% phosphoric acid by 0.5% and sodium nitrite by 0.02% was prepared. This aqueous solution is a so-called zinc calcium phosphate conversion treatment solution. The pieces were immersed for 1 minute in this conversion treatment solution and were thoroughly rinsed with deionized water. The pieces were dried for 15 minutes in a warm-air dryer at a temperature of 90°C.

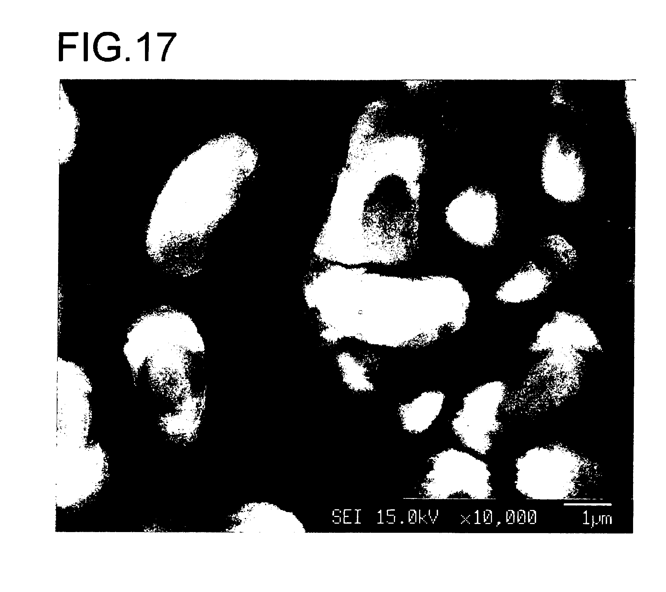

Fig. 17 illustrates an electron micrograph in magnification of 10,000 times of obtained steel plate pieces. As can be observed in Fig. 17, the electron micrograph with magnification of 10,000 times showed both smooth-surfaced formations shaped as natural stones (garden stones) having a diameter of 3 to 4 µm and a rough surface of periodic fine irregularities in an approximately fifty-fifty proportion. The perlite structure peculiar to rolled steel plate is completely buried out of sight. When scanned five times over 20 µm using a scanning probe microscope, the pieces exhibited an average length (RSm) of 2.5 to 4.0 µm and a maximum height roughness (Rz) of 1.8 to 2.4 µm. Thereafter, the ends of the SPCC steel plate pieces were bonded to each other using the epoxy adhesive "EP-106", in exactly the same way as in experimental example 1. The shear breaking strength in a tensile breaking test was 60 MPa.

### [Experimental example 18] (Steel material and adhesive)

A commercially available 1.6 mm-thick cold rolled steel plate "SPCC" was procured and was cut into rectangular steel plate pieces of 45 mm x 18 mm. A through-hole was formed at the end of each of the steel plate pieces and adhering rust was removed from both faces through blasting using a sandblasting machine. A PVC-coated copper wire was threaded through the through-hole of each of the steel plate pieces and then the copper wires were bent to suspend simultaneously all the steel plate pieces in such a manner as to prevent the latter from becoming stacked on one another. In a dipping bath by heating an aqueous solution containing commercially available degreasing agent "NE-6 (by Meltex)" for aluminum alloys by 7.5% was prepared at a temperature of 75°C. The steel plate pieces were immersed in this aqueous solution for 5 minutes, followed by water rinsing. Next, the steel plate pieces were immersed for 1 minute in another dipping bath of a 1.5% aqueous solution of caustic soda at 40°C and were thoroughly rinsed with water thereafter.

An aqueous solution containing 98% sulfuric acid by 5% was prepared next at 50°C in another dipping bath. The steel plate pieces were immersed for 0.25 minutes in the aqueous solution, followed by water rinsing. Next, the pieces were immersed for 1 minute in 1% aqueous ammonia at 25°C, followed by water rinsing. In a separate dipping bath an aqueous solution at 65°C containing zinc oxide by 0.2%, basic nickel carbonate by 0.2%, sodium fluorosilicate by 0.2% and phosphoric acid by 1.2% was prepared. Such an aqueous solution is a so-called zinc phosphate-type conversion treatment solution. The pieces were immersed for 1 minute in this conversion treatment solution and were then thoroughly rinsed with deionized water. The pieces were dried for 15 minutes in a warm-air dryer at a temperature of 90°C.

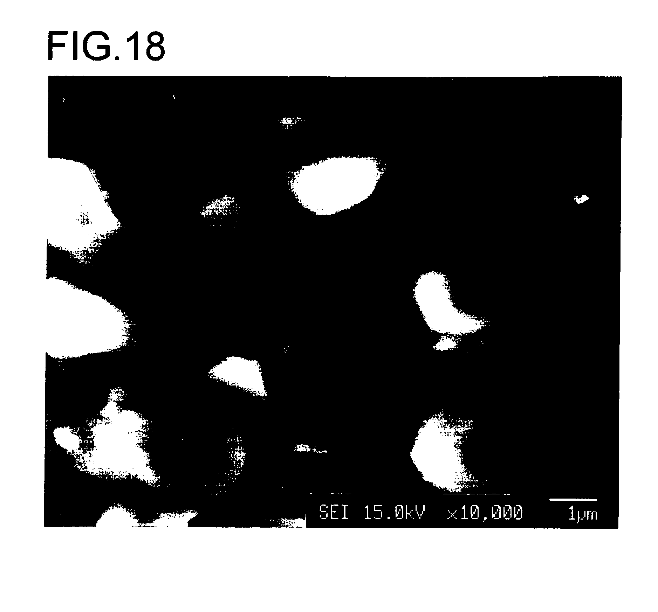

Fig. 18 illustrates an electron micrograph with magnification of 10,000 times of the obtained steel plate pieces. As can be observed in Fig. 18, the electron micrograph with magnification of 10,000 times showed both smooth-surfaced formations shaped as natural stones having long/short diameters of 1.5 to 5 µm and a rough surface of periodic fine irregularities, in an approximately fifty-fifty proportion. The perlite structure peculiar to rolled steel plate is completely buried out of sight. When scanned five times over 20 µm using a scanning probe microscope, the pieces exhibited an average length (RSm) of 2.7 to 4.5 µm and a maximum height roughness (Rz) of 2 to 2.5 µm. Thereafter, the ends of the SPCC steel plate pieces were bonded to each other using the epoxy adhesive "EP-106", in exactly the same way as in experimental example 1. The shear breaking strength in a tensile breaking test was of 59 MPa.

### [Experimental example 19] (Steel material and adhesive)

A commercially available 1.6 mm-thick hot rolled steel "SPHC" plate material was procured and was cut into multiple rectangular steel plate pieces of 45 mm x 18 mm. A through-hole was formed at the end of each of the steel plate pieces and adhering rust was removed from both faces through blasting using a sandblasting machine. A PVC-coated copper wire was threaded through the through-hole at the end of each of a dozen of the steel plate pieces and then the copper wires were bent to suspend simultaneously all the steel plate pieces in such a manner as to prevent the latter from becoming stacked on one another. In a dipping bath by heating, an aqueous solution containing commercially available degreasing agent "NE-6 (by Meltex)" for aluminum alloys by 7.5% was prepared at a temperature of 60°C. The steel plate pieces were immersed in this aqueous solution for 5 minutes, followed by water rinsing.

Next, the steel plate pieces were immersed for 1 minute in another dipping bath of a 1.5% aqueous solution of caustic soda at 40°C and were rinsed with water thereafter. In another dipping bath, aqueous solution at 65°C containing 98% sulfuric acid by 10% and ammonium hydrogen bifluoride by 1% was prepared. The steel plate pieces were immersed for 0.5 minutes in the aqueous solution, followed by water rinsing. Next, the pieces were immersed for 1 minute in 1% aqueous ammonia at 25°C, followed by water rinsing. The pieces were immersed for 1 minute in an aqueous solution at 40°C containing calcium nitrate by 1.3%, zinc phosphate by 0.5%, zinc nitrate by 0.5%, 80% phosphoric acid by 0.5% and sodium nitrite by 0.02%. The pieces were then thoroughly rinsed with deionized water, and were dried for 15 minutes in a warm-air dryer at a temperature of 90°C.

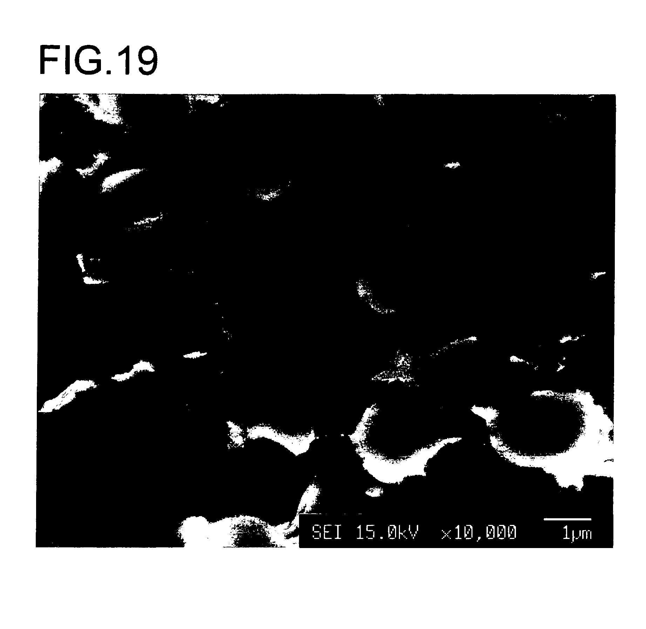

Fig. 19 illustrates an electron micrograph in magnification of 10,000 times of the obtained steel plate pieces. As can be observed in Fig. 19, the electron micrograph with magnification of 10,000 times showed both smooth-surfaced formations shaped as natural stones having long/short diameters of 2 to 3 µm and a rough surface of periodic fine irregularities, in an approximately fifty-fifty proportion. The perlite structure peculiar to rolled steel plate is completely buried out of sight. When scanned five times over 20 µm using a scanning probe microscope, the pieces exhibited an average length (RSm) of 3 to 5 µm and a maximum height roughness (Rz) of 1.8 to 2.4 µm. Thereafter, the ends of the SPCC steel plate pieces were bonded to each other using the epoxy adhesive "EP-106", in exactly the same way as in experimental example 1. The shear breaking strength in a tensile breaking test was 58 MPa.

### [Experimental example 20] (Steel material and adhesive)

A commercially available 1.6 mm-thick plate material of hot rolled steel plate for automobiles "SAPH 440" was procured and was cut into multiple rectangular steel plate pieces of 45 mm x 18 mm. A through-hole was formed at the end of each of the steel plate pieces and adhering rust was removed from both faces through blasting using a sandblasting machine. A PVC-coated copper wire was threaded through the through-hole at the end of each of a dozen of steel plate pieces and then the coppers wire were bent to suspend simultaneously all the steel plate pieces in such a manner as to prevent the latter from becoming stacked on one another. An aqueous solution containing commercially available degreasing agent "NE-6 (by Meltex)" for aluminum alloys by 7.5% was prepared in a dipping bath at a temperature of 60°C. The steel plate pieces were immersed in this aqueous solution for 5 minutes, followed by water rinsing.

Next, the steel plate pieces were immersed for 1 minute in another dipping bath of a 1.5% aqueous solution of caustic soda at 40°C and were rinsed with water thereafter. In another dipping bath, another aqueous solution at 65°C containing 98% sulfuric acid by 10% and ammonium hydrogen bifluoride by 1% was prepared. The steel plate pieces were immersed for 0.5 minutes in the aqueous solution, followed by water rinsing. Next, the pieces were immersed for 1 minute in 1% aqueous ammonia at 25°C, followed by water rinsing. The pieces were immersed for 1 minute in an aqueous solution at 40°C containing calcium nitrate by 1.3%, zinc phosphate by 0.5%, zinc nitrate by 0.5%, 80% phosphoric acid by 0.5% and sodium nitrite by 0.02%. The pieces were then thoroughly rinsed with deionized water and were dried for 15 minutes in a warm-air dryer at a temperature of 90°C.

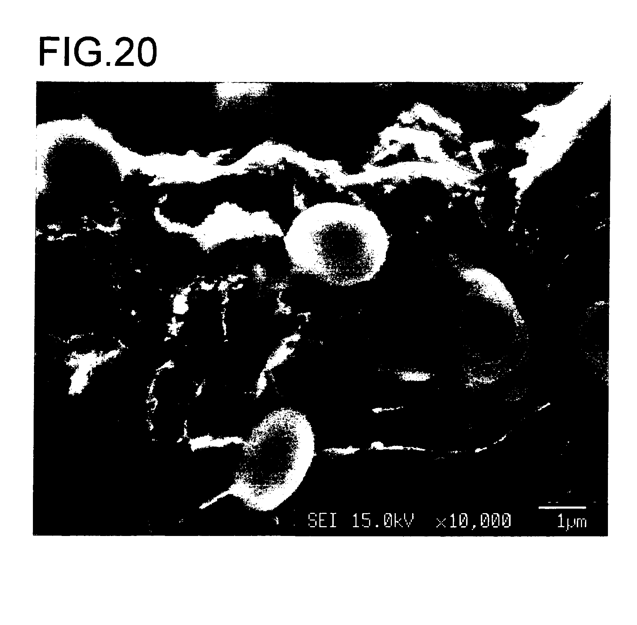

Fig. 20 illustrates an electron micrograph of the obtained steel plate pieces. As can be observed in the micrograph of Fig. 20, the electron micrograph with magnification of 10,000 times showed both smooth-surfaced formations shaped as natural stones having long/short diameters of 2 to 4 µm and a rough surface of periodic fine irregularities, in an approximately fifty-fifty proportion. The perlite structure peculiar to rolled steel plate is completely buried out of sight. When scanned five times over 20 µm using a scanning probe microscope, the pieces exhibited an average length (RSm) of 2.5 to 4.0 µm and a maximum height roughness (Rz) of 1.8 to 2.4 µm. Thereafter, the ends of the SPCC steel plate pieces were bonded to each other using the epoxy adhesive "EP-106", in exactly the same way as in experimental example 1. The shear fracture strength in a tensile breaking test was 60 MPa.

## Claims

1. A steel material composite, comprising:
a first metal part which is made of a ferrous material and has micron-scale roughness produced by chemical etching and substantially the entire surface of which is covered with, under electron microscopy, ultra-fine irregularities shaped as an endless succession of steps having a height of 50 to 150 nm, a depth of 80 to 500 nm and a width of several hundred to several thousand nm, the surface being a thin layer of a natural oxide of iron; and
another adherend that is bonded using, as an adhesive, an epoxy adhesive (1) that penetrates into said ultra-fine irregularities.

2. A steel material composite, comprising:
a first metal part which is made of a ferrous material and has micron-scale roughness produced by chemical etching and substantially the entire surface of which is covered with, under electron microscopy, ultra-fine irregularities shaped as an endless succession of steps having a height of 80 to 150 nm, a depth of 80 to 200 nm and a width of several hundred to several thousand nm, the surface being a thin layer of a natural oxide of iron; and
another adherend that is bonded using, as an adhesive, an epoxy adhesive (1) that penetrates into said ultra-fine irregularities.

3. A steel material composite, comprising:
a first metal part which is made of a hot rolled steel material and has micron-scale roughness produced by chemical etching and substantially the entire surface of which is covered with, under electron microscopy, ultra-fine irregularities shaped as an endless succession of steps having a height of 80 to 150 nm, a depth of 80 to 500 nm and a width of several hundred to several thousand nm, the surface being a thin layer of a natural oxide of iron; and
another adherend that is bonded using, as an adhesive, an epoxy adhesive (1) that penetrates into said ultra-fine irregularities.

4. A steel material composite, comprising:
a first metal part which is made of a hot rolled steel material and has micron-scale roughness produced by chemical etching and substantially the entire surface of which is covered with, under electron microscopy, ultra-fine irregularities shaped as an endless succession of steps having a height of 50 to 100 nm, a depth of 80 to 200 nm and a width of several hundred to several thousand nm, the surface being a thin layer of a natural oxide of iron; and
another adherend that is bonded using, as an adhesive, an epoxy adhesive (1) that penetrates into said ultra-fine irregularities.

5. A steel material composite, comprising:
a first metal part which is made of a steel material and has micron-scale roughness produced by chemical etching and substantially the entire surface of which is covered with, under electron microscopy, ultra-fine irregularities shaped as an endless succession of steps having a height of 50 to 150 nm, a depth of 80 to 500 nm and a width of several hundred to several thousand nm, the surface being a thin layer of a metal oxide or a metal phosphate; and
another adherend that is bonded using, as an adhesive, an epoxy adhesive (1) that penetrates into said ultra-fine irregularities.

6. A steel material composite, comprising:
a first metal part which is made of a steel material and has micron-scale roughness produced by chemical etching and substantially the entire surface of which is covered with, under electron microscopy, ultra-fine irregularities shaped as an endless succession of steps having a height of 80 to 150 nm, a depth of 80 to 200 nm and a width of several hundred to several thousand nm, the surface being a thin layer of a metal oxide or a metal phosphate; and
another adherend that is bonded using, as an adhesive, an epoxy adhesive (1) that penetrates into said ultra-fine irregularities.

7. A steel material composite, comprising:
a first metal part which is made of a steel material and has micron-scale roughness produced by chemical etching and substantially the entire surface of which is covered with, under electron microscopy, ultra-fine irregularities shaped as an endless succession of steps having a height of 80 to 150 nm, a depth of 80 to 500 nm and a width of several hundred to several thousand nm, the surface being a thin layer of a metal oxide or a metal phosphate; and
another adherend that is bonded using, as an adhesive, an epoxy adhesive (1) that penetrates into said ultra-fine irregularities.

8. A steel material composite, comprising:
a first metal part which is made of a steel material and has micron-scale roughness produced by chemical etching and substantially the entire surface of which is covered with, under electron microscopy, ultra-fine irregularities shaped as an endless succession of steps having a height of 50 to 100 nm, a depth of 80 to 200 nm and a width of several hundred to several thousand nm, the surface being a thin layer of a metal oxide or a metal phosphate; and
another adherend that is bonded using, as an adhesive, an epoxy adhesive (1) that penetrates into said ultra-fine irregularities.

9. A steel material composite, comprising:
a steel material part which has micron-scale roughness produced by chemical etching and the surface of which exhibits, under electron microscopy, smooth-surfaced natural stone-like configuration, having long/short diameters of 2 to 5 µm and scattered or present at a high density over a rough surface having periodic fine irregularities, said rough surface being covered with, under electron microscopy, ultra-fine irregularities shaped as square stone-like and/or granular configuration, having long/short diameters of 10 to 400 nm and present at high density on a plane or stacked onto each other at a yet higher density and the surface being mainly a thin layer comprising zinc phosphate or zinc-calcium phosphate; and
another adherend that is bonded using, as an adhesive, an epoxy adhesive (1) that penetrates into said ultra-fine irregularities.

10. The steel material composite according to any one of claims 1 to 4,
wherein said first metal part is a steel material having further adhered thereto one compound selected from among ammonia, hydrazine and a water-soluble amine compound.

11. The steel material composite according to any one of claims 4 to 9,
wherein the metal oxide or metal phosphate that makes up the surface of said first metal part is one oxide selected from among chromium oxides, manganese oxides and zinc phosphate.

12. The steel material composite according to any one of claims 1 to 11,
wherein said adherend is a second metal part made of a steel material and having said ultra-fine irregularities formed thereon.

13. The steel material composite according to any one of claims 1 to 11,
wherein said adherend is a fiber-reinforced plastic, comprising said epoxy adhesive and reinforced through filling and laminating of one or more types selected from among long fibers, short fibers and fiber cloth.

14. The steel material composite according to any one of claims 1 to 13,
wherein the roughness of said ultra-fine irregularities is such that an average length (RSm) is 0.8 to 10 µm and a maximum height (Rz) is 0.2 to 5 µm.

15. The steel material composite according to any one of claims 1 to 14,
wherein said chemical etching involves immersion in an aqueous solution of a non-oxidizing strong acid.

16. The steel material composite according to any one of claims 1 to 15,
wherein said chemical etching involves immersion in an aqueous solution containing sulfuric acid.

17. The steel material composite according to any one of claims 1 to 16,
wherein a resin of a cured product (1) of said epoxy adhesive contains an elastomer component by no more than 30 parts by mass relative to a total 100 parts by mass of resin fraction.

18. The steel material composite according to any one of claims 1 to 17,
wherein a cured product (1) of said epoxy adhesive contains a filler by no more than 100 parts by mass relative to a total 100 parts by mass of resin fraction.

19. The steel material composite according to claim 18,
wherein said filler is one or more types of reinforcing fiber selected from among glass fibers, carbon fibers and aramid fibers and one or more types of powder filler selected from among calcium carbonate, magnesium carbonate, silica, talc, clay and glass.

20. The steel material composite according to claim 17,
wherein said elastomer component has a particle size of 1 to 15 µm and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C and a polyolefin resin.

21. A method for manufacturing a steel material composite, comprising:
a shaping step of mechanically shaping a steel material;
a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these ultra-fine irregularities to exhibit roughness having an average length (RSm) of 1 to 10 µm and a maximum height roughness (Rz) of 0.2 to 5 µm, as analyzed by scanning probe microscopy;
a step of applying an epoxy adhesive onto said ultra-fine irregularities; and
a bonding step of bonding another adherend to said ultra-fine irregularities having said epoxy adhesive applied thereon.

22. A method for manufacturing a steel material composite, comprising:
a shaping step of mechanically shaping a steel material into a steel material part;
a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these fine irregularities to exhibit roughness having an average length (RSm) of 1 to 10 µm and a maximum height roughness (Rz) of 0.2 to 5 µm, as observed by scanning probe microscopy;
a step of applying an epoxy adhesive onto said ultra-fine irregularities;
a step of placing said steel material part, having been coated with said epoxy adhesive, in an airtight vessel, depressurizing the vessel and then pressurizing the vessel to cause said epoxy adhesive to impregnate said steel material part; and
a bonding step of bonding another adherend to said ultra-fine irregularities having said epoxy adhesive applied thereon.

23. A method for manufacturing a steel material composite, comprising:
a shaping step of mechanically shaping a steel material;
a liquid treatment step including chemical etching for causing the entire surface of the shaped steel material part to be covered with, under electron microscopy, ultra-fine irregularities in which a thin amorphous material covers a shape of an endless succession of steps having a height and depth of 50 to 500 nm and a width of several hundred to several thousand nm and for causing a large texture made up of these fine irregularities to exhibit roughness having an average length (RSm) of 1 to 10 µm and a maximum height roughness (Rz) of 0.2 to 5 µm as analyzed by scanning probe microscopy;
a step of applying an epoxy adhesive onto said ultra-fine irregularities; and
a bonding step of bonding another adherend to said ultra-fine irregularities having said epoxy adhesive applied thereon.

24. A method for manufacturing a steel material composite, comprising:
a shaping step of mechanically shaping a steel material;
a liquid treatment step including chemical etching for causing the entire surface of the shaped steel material part to be covered with, under electron microscopy, ultra-fine irregularities in which a thin amorphous material covers a shape of an endless succession of steps having a height and depth of 50 to 500 nm and a width of several hundred to several thousand nm and for causing a large texture made up of these fine irregularities to exhibit roughness having an average length (RSm) of 1 to 10 µm and a maximum height roughness (Rz) of 0.2 to 5 µm, as analyzed by scanning probe microscopy;
a step of applying an epoxy adhesive onto said ultra-fine irregularities;
a step of placing said substrate, having been coated with an adhesive, in an airtight vessel, depressurizing the vessel and then pressurizing the vessel to cause the adhesive to impregnate the substrate; and
a bonding step of bonding another adherend to said ultra-fine irregularities having said epoxy adhesive applied thereon.

25. A method for manufacturing a steel material composite, comprising:
a shaping step of mechanically shaping a steel material;
a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these fine irregularities to exhibit roughness having an average length (RSm) of 1 to 10 µm and a maximum height roughness (Rz) of 0.2 to 5 µm, as analyzed by scanning probe microscopy;
a supplementary step of immersing said substrate, after being subjected to said step, in an aqueous solution containing at least one compound selected from among a hexavalent chromium compound, a permanganate salt, a zinc phosphate compound, ammonia, hydrazine and a water-soluble amine compound;
a step of applying an epoxy adhesive onto said ultra-fine irregularities; and
a bonding step of bonding another adherend to said ultra-fine irregularities having said epoxy adhesive applied thereon.

26. A method for manufacturing a steel material composite, comprising:
a shaping step of mechanically shaping a steel material;
a liquid treatment step including chemical etching for causing the entire surface of the shaped steel material part to be covered with, under electron microscopy, ultra-fine irregularities shaped as an endless succession of steps having a height and depth of 50 to 500 nm and a width of several hundred to several thousand nm and for causing a large texture made up of these fine irregularities to exhibit roughness having an length (RSm) of 1 to 10 µm and a maximum height roughness (Rz) of 0.2 to 5 µm, as analyzed by scanning probe microscopy;
a supplementary step of immersing said substrate, after being subjected to said step, in an aqueous solution containing at least one compound selected from among a hexavalent chromium compound, a permanganate salt, a zinc phosphate compound, ammonia, hydrazine and a water-soluble amine compound;
a step of applying an epoxy adhesive onto said fine irregularities;
a step of placing said substrate, having been coated with an adhesive, in an airtight vessel, depressurizing the vessel and then pressurizing the vessel to cause the adhesive to impregnate the substrate; and
a bonding step of bonding another adherend to said ultra-fine irregularities having said epoxy adhesive applied thereon.
